# EUROPÄISCHE PATENTSCHRIFT

(11) **EP 0 623 655 B1**
(45) Veröffentlichungstag und Bekanntmachung des Hinweises auf die Patenterteilung: **16.07.1997**
(21) Anmeldenummer: 94810238.9
(22) Anmeldetag: 27.04.1994
(51) Int. Cl.: C09B 62/04, C09B 62/44, C09B 62/503, C09B 62/002

(54) **Faserreaktive Farbstoffe, ihre Herstellung und Verwendung**
Fiber-reactive dyes, their preparation and their use
Colorants réactifs sur la fibre, leur préparation et leur utilisation

(30) Priorität: 06.05.1993 CH 1391/93
(43) Veröffentlichungstag der Anmeldung: 09.11.1994
(73) Patentinhaber: Ciba Specialty Chemicals Holding Inc., 4057 Basel (CH)
(72) Erfinder: Deitz, Rolf, CH-4058 Basel (CH); Tzikas, Athanassios, Dr., CH-4133 Pratteln (CH)

(56) Entgegenhaltungen:
- GB-A- 2 007 247

## Beschreibung

Die vorliegende Erfindung betrifft neue faserreaktive Farbstoffe, die zum Färben von cellulosehaltigen Fasermaterialien aus wässrigem Bad sowie zum Bedrucken cellulosehaltiger Fasermaterialien geeignet sind.

In der GB-A-2007247 sind bereits Farbstoffe der unten angegebenen Formel (1) generisch erwähnt, die sich von den erfindungsgemässen Farbstoffen in charakteristischer Weise dadurch unterscheiden, dass sie einen nicht-faserreaktiven Rest Z enthalten.

Gegenstand der Erfindung sind Verbindungen der Formel 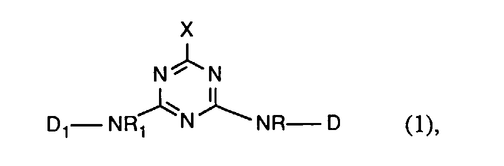 worin D ein Rest der Formel 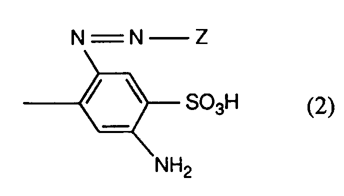 ist,
D₁ den Rest eines Monoazo-, Polyazo-, Metallkomplexazo-, Anthrachinon-, Triphendioxazin-, Phthalocyanin- oder Formazan-Chromophors bedeutet,
X für Fluor, Chlor, Brom, 3-Carboxypyridin-1-yl, 3-Carbamoylpyridin-1-yl, gegebenenfalls substituiertes Amino, Hydroxy, C₁-C₄-Alkoxy, Phenoxy, C₁-C₄-Alkylthio, Morpholino, Aryl oder Aralkyl steht,
R und R₁ unabhängig voneinander je Wasserstoff oder gegebenenfalls durch Halogen, Hydroxy, Cyano, C₁-C₄-Alkoxy, C₁-C₄-Alkoxycarbonyl, Carboxyl, Sulfo oder Sulfato substituiertes C₁-C₄-Alkyl bedeuten, und
Z einen Rest der Formel 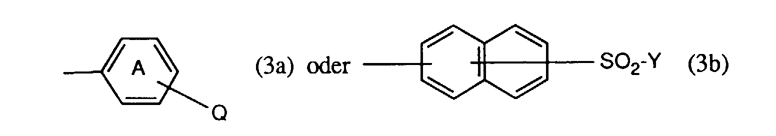 bedeutet,
Q für einen Rest der Formel

   -SO₂-Y (5a),

   -CONH-(CH₂)ₙ-SO₂-Y (5b),

   -(O)ₚ-(CH₂)ₘ-CONH-(CH₂)ₙ-SO₂-Y (5c)

   oder

   -NH-CO-T (5d)

   steht,
Y Vinyl oder einen Rest -C₂-CH₂-U bedeutet und U eine Abgangsgruppe ist,
T α,β-Halogenopropionyl oder α-Halogenoacryloyl bedeutet,
n und m unabhängig voneinander eine ganze Zahl 1 bis 6 sind,
p die Zahl 0 oder 1 bedeutet, und
der Phenylring A gegebenenfalls weitersubstituiert ist.

C₁-C₄-Alkyl bedeutet generell Methyl, Ethyl, n- oder iso-Propyl oder n-, iso-, sec.- oder tert.-Butyl; C₁-C₄-Alkoxy umfasst generell Methoxy, Ethoxy, n- oder iso-Propoxy und n-, iso-, sec.- oder tert.-Butoxy; Halogen steht generell z.B. für Fluor, Brom oder insbesondere Chlor; C₁-C₄-Alkoxycarbonyl bedeutet generell Methoxycarbonyl, Ethoxycarbonyl, n- oder iso-Propoxycarbonyl oder n-, iso-, sec.- oder tert-Butoxycarbonyl, vorzugsweise Methoxycarbonyl oder Ethoxycarbonyl. Aryl bedeutet z.B. unsubstituiertes oder durch C₁-C₄-Alkyl, C₁-C₄-Alkoxy, Halogen, Carboxy oder Sulfo substituiertes Phenyl oder Naphthyl, vorzugsweise unsubstituiertes oder durch Methyl, Ethyl, Methoxy, Ethoxy, Chlor, Carboxy oder Sulfo substituiertes Phenyl. Aralkyl steht z.B. für Benzyl oder Phenylethyl.

Beispiele für geeignete Reste R und R₁ sind Wasserstoff, unsubstituiertes C₁-C₄-Alkyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanoethyl, Sulfomethyl, β-Sulfoethyl und β-Sulfatoethyl.

R und R₁ stehen unabhängig voneinander je bevorzugt für Methyl, Ethyl oder insbesondere für Wasserstoff.

Steht X in Formel (1) für gegebenenfalls substituiertes Amino, so ist darunter z.B. -NH₂, unsubstituiertes oder im Alkylteil z.B. durch Hydroxy, Carboxy oder C₁-C₄-Alkoxy substituiertes N-Mono- oder N,N-Di-C₁-C₄-Alkylamino, Cyclohexylamino oder unsubstituiertes oder im Phenylteil z.B. durch C₁-C₄-Alkyl, C₁-C₄-Alkoxy, Carboxy, Sulfo, Halogen oder durch einen Rest der zuvor angegebenen Formel (5a), (5b),(5c) oder (5d) substituiertes Phenylamino oder N-C₁-C₄-Alkyl-N-phenylamino zu verstehen.

X steht als gegebenenfalls substituiertes Amino bevorzugt für Amino, Methylamino, Ethylamino, Carboxymethylamino, β-Hydroxyethylamino, N,N-Di-β-hydroxyethylamino, Cyclohexylamino, o-, m- oder p-Methylphenylamino, o-, m- oder p-Methoxyphenylamino, o-, m- oder p-Sulfophenylamino, 2,4- oder 2,5-Disulfophenylamino, o-Carboxyphenylamino, N-Ethyl-N-phenylamino, N-Methyl-N-phenylamino oder für Phenylamino, welches durch einen Rest der Formel (5a) oder (5b) substituiert ist. Besonders bevorzugt sind für X als gegebenenfalls substituiertes Amino die Bedeutungen Amino, β-Hydroxyethylamino, N,N-Di-β-hydroxyethylamino und o-, m- oder p-Sulfophenylamino.

X steht als C₁-C₄-Alkylthio bevorzugt für Methyl- oder Ethylthio.

Bevorzugte Bedeutungen von X sind Chlor, Fluor, Hydroxy, Amino, unsubstituiertes oder im Alkylteil durch Hydroxy substituiertes N-Mono- oder N,N-Di-C₁-C₄-Alkylamino, unsubstituiertes oder im Phenylteil durch Methyl, Ethyl, Methoxy, Ethoxy, Carboxy, Sulfo, Chlor oder durch einen Rest der Formel (5a) oder (5b) substituiertes Phenylamino, Methoxy, Ethoxy, iso-Propoxy, Methylthio, Ethylthio oder Morpholino.

Besonders bevorzugt steht X für Chlor, Fluor, Amino, β-Hydroxyethylamino, N,N-Di-β-hydroxyethylamino, o-, m- oder p-Sulfophenylamino oder Morpholino. Insbesondere bevorzugt sind für X die Bedeutungen Chlor und Fluor.

Trägt der Phenylring A in Formel (3a) weitere Substituenten, handelt es sich z.B. um C₁-C₄-Alkyl, C₁-C₄-Alkoxy, Halogen, Carboxy oder Sulfo. Der Phenylring A trägt bevorzugt keine weiteren Substituenten oder 1 oder 2 Reste aus der Gruppe Methyl, Ethyl, Methoxy, Ethoxy, Chlor und Sulfo. Besonders bevorzugt trägt der Ring A keine weiteren Substituenten oder ist durch eine Sulfogruppe weitersubstituiert.

Geeignete Abgangsgruppen U sind z.B. Halogen, z.B. Chlor, Acyloxy, z.B. Acetoxy oder Benzoyloxy, Phosphato, Sulfato und Thiosulfato.

Beispiele für geeignete Reste Y sind dementsprechend Vinyl, β-Brom- und β-Chlorethyl, β-Acetoxyethyl, β-Benzoyloxyethyl, β-Phosphatoethyl, β-Sulfatoethyl und β-Thiosulfatoethyl. Y steht bevorzugt für Vinyl oder β-Sulfatoethyl.

Beispiele für geeignete Reste T sind α,β-Dichlor- und α,β-Dibrompropionyl und α-Chlor- und α-Bromacryloyl; bevorzugt als Rest T sind α,β-Dibrompropionyl und α-Bromacryloyl.

n steht vorzugsweise für die Zahl 2, 3 oder 4, besonders bevorzugt für die Zahl 2 oder 3 und insbesondere bevorzugt für die Zahl 2.

m steht vorzugsweise für die Zahl 1, 2 oder 3 und besonders bevorzugt für die Zahl 1 oder 2.

p steht bevorzugt für die Zahl 0.

Q steht bevorzugt für einen Rest der Formel

-SO₂-Y (5a),

-CONH-(CH₂)₂₋₄-SO₂-Y (5b'),

-(CH₂)₁₋₃-CONH-(CH₂)₂₋₄-SO₂-Y (5c')

oder

-NH-CO-T (5d),

worin Y Vinyl, β-Brom- und β-Chlorethyl, β-Acetoxyethyl, β-Phenoxyethyl, β-Phosphatoethyl, β-Sulfatoethyl oder β-Thiosulfatoethyl und T α,β-Dibrompropionyl oder α-Bromacryloyl bedeuten.

Besonders bevorzugt sind für Q die Bedeutungen

-SO₂-Y (5a)

und

-CONH-(CH₂)₂₋₃-SO₂-Y (5bʺ),

worin Y Vinyl oder β-Sulfatoethyl bedeutet.

Z steht vorzugsweise für einen Phenylrest der zuvor angegebenen Formel (3a), der ausser Q keine weiteren Substituenten trägt oder durch 1 oder 2 Reste aus der Gruppe Methyl, Ethyl, Methoxy, Ethoxy, Chlor und Sulfo weitersubstituiert ist, und worin für Q die zuvor angegebenen Bedeutungen und Bevorzugungen gelten.

Z steht besonders bevorzugt für einen Rest der Formel 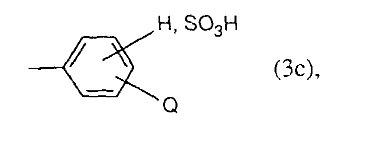 worin für Q die zuvor angegebenen Bedeutungen und Bevorzugungen gelten.

Die Chromophorreste D₁ können an ihrem Grundgerüst die bei organischen Farbstoffen üblichen Substituenten gebunden enthalten.

Als Beispiele für solche weiteren Substituenten der Reaktivfarbstoffe seien genannt: C₁-C₄-Alkyl, C₁-C₄-Alkoxy, im Alkylteil z.B. durch Hydroxy, C₁-C₄-Alkoxy oder Sulfato substituiertes C₁-C₄-Alkoxy wie z.B. 2-Hydroxyethoxy, 3-Hydroxypropoxy, 2-Sulfatoethoxy, 2-Methoxyethoxy oder 2-Ethoxyethoxy, Acylaminogruppen mit 1 bis 8 Kohlenstoffatomen, insbesondere Alkanoylaminogruppen und Alkoxycarbonylaminogruppen, wie Acetylamino, Propionylamino, Methoxycarbonylamino, Ethoxycarbonylamino oder Benzoylamino, Phenylamino, N,N-Di-β-hydroxyethylamino, N,N-Di-β-sulfatoethylamino, Sulfobenzylamino, N,N-Disulfobenzylamino, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Ethylcarbamoyl, Sulfamoyl, N-Alkylsulfamoyl mit 1 bis 4 Kohlenstoffatomen, wie N-Methylsulfamoyl, N-Ethylsulfamoyl, N-Propylsulfamoyl, N-Isopropylsulfamoyl oder N-Butylsulfamoyl, N-(β-Hydroxyethyl)-sulfamoyl, N,N-Di-(β-hydroxyethyl)-sulfamoyl, N-Phenylsulfamoyl, Ureido, Hydroxy, Carboxy, Sulfomethyl oder Sulfo sowie faserreaktive Reste. Vorzugsweise enthalten die Reaktivfarbstoffe eine oder mehrere Sulfonsäuregruppen.

Enthält D₁ einen oder mehrere faserreaktive Reste, handelt es sich z.B. unabhängig um einen oder mehrere der zuvor angegebenen Reste Q und vorzugsweise um einen Rest -SO₂-Y, worin für Q und Y jeweils die zuvor angegebenen Bedeutungen und Bevorzugungen gelten. Eine bevorzugte Ausführungsform der vorliegenden Erfindung betrifft Verbindungen der zuvor angegebenen Formel (1), worin D₁ keinen weiteren Reaktivrest enthält.

Bevorzugte Bedeutungen von D₁ betreffen:
a) Farbstoffreste eines 1:1-Kupferkomplexazofarbstoffes der Benzol- oder Naphthalinreihe, worin das Kupferatom an je eine metallisierbare Gruppe beidseitig in ortho-Stellung zur Azobrücke gebunden ist.
b) Farbstoffreste eines Mono- oder Disazofarbstoffes, der Formel

   D*-N=N-(M-N=N)ᵤ-K- (6a)

   oder

   -D*-N=N-(M-N=N)ᵤ-K (6b)

   oder eines davon abgeleiteten Metallkomplexes; D* ist der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe, wobei D*, M und K bei Azofarbstoffen übliche Substituenten tragen können, insbesondere Hydroxy-, Amino-, Methyl-, Ethyl-, Methoxy- oder Ethoxygruppen, einen 2-Hydroxyethoxy-, 2-Sulfatoethoxy-, 2-Methoxyethoxy- oder 2-Ethoxyethoxyrest, gegebenenfalls substituierte Alkanoylaminogruppen mit 2 bis 4 C-Atomen, gegebenenfalls substituierte Benzoylaminogruppen, Halogenatome oder einen faserreaktiven Rest, insbesondere einen Rest -SO₂-Y, wobei Y die zuvor angegebene Bedeutung hat; u = 0 oder 1 ist; und D*, M und K zusammen mindestens zwei Sulfogruppen, vorzugsweise drei oder vier Sulfogruppen, enthalten.
c) Farbstoffreste eines Disazofarbstoffes, der Formel

   -D*-N=N-K₁-N=N-D₁* (7a),

   worin D* und D₁* unabhängig voneinander der Rest einer Diazokomponente der Benzol- oder Naphthalinreihe sind und K₁ der Rest einer Kupplungskomponente der Naphthalinreihe ist; wobei D*, D₁* und K₁ bei Azofarbstoffen übliche Substituenten tragen können, insbesondere Hydroxy-, Amino-, Methyl-, Ethyl-, Methoxy- oder Ethoxygruppen, einen 2-Hydroxyethoxy-, 2-Sulfatoethoxy-, 2-Methoxyethoxy- oder 2-Ethoxyethoxyrest, gegebenenfalls substituierte Alkanoylaminogruppen mit 2 bis 4 C-Atomen, gegebenenfalls substituierte Benzoylaminogruppen, Halogenatome oder einen faserreaktiven Rest, insbesondere einen Rest -SO₂-Y, wobei Y die zuvor angegebene Bedeutung hat, und D*, D₁* und K₁ zusammen mindestens zwei Sulfogruppen, vorzugsweise drei oder vier Sulfogruppen, enthalten.
d) Farbstoffreste eines Formazanfarbstoffes, der Formel 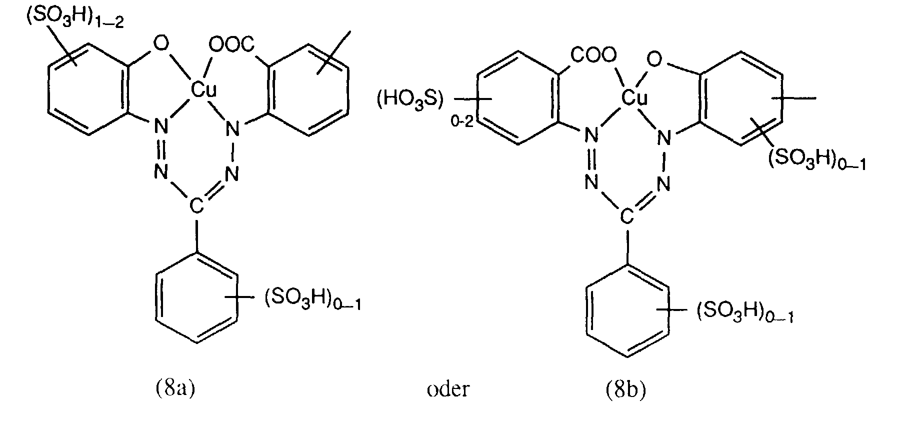 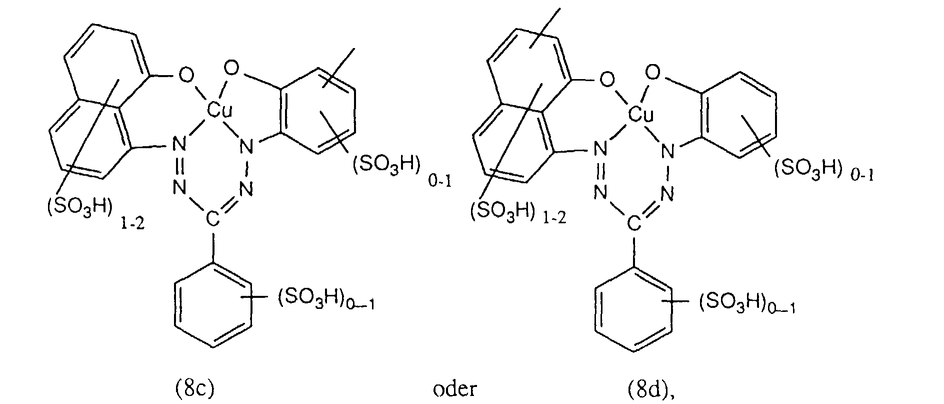 worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.
e) Farbstoffreste eines Anthrachinonfarbstoffes, der Formel 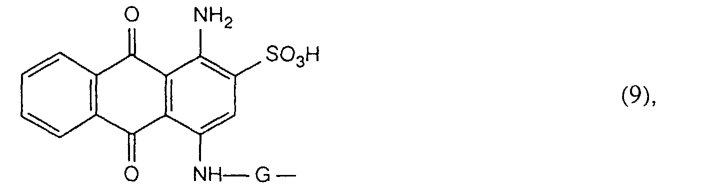 worin G ein Phenylen-, Cyclohexylen-, Phenylenmethylen- oder C₂-C₆-Alkylenrest ist; wobei der Anthrachinonkern durch eine weitere Sulfogruppe, und G als Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.
f) Farbstoffreste eines Phthalocyaninfarbstoffes, der Formel 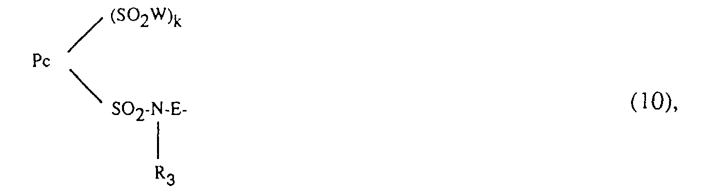 worin Pc der Rest eines Kupfer- oder Nickelphthalocyanins; W -OH und/oder -NR₄R₅; R₄ und R₅ unabhängig voneinander Wasserstoff oder Alkyl mit 1 bis 4 Kohlenstoffatomen, das durch Hydroxy oder Sulfo substituiert sein kann; R₃ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Ethylenrest; und k = 1, 2 oder 3 ist.
g) Farbstoffreste eines Dioxazinfarbstoffes, der Formel 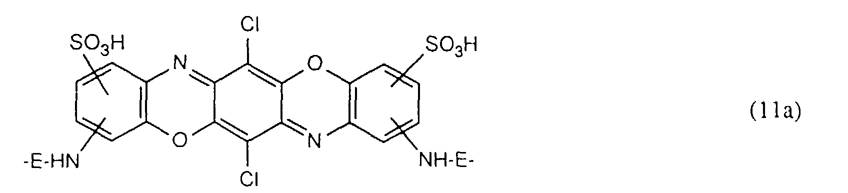 oder 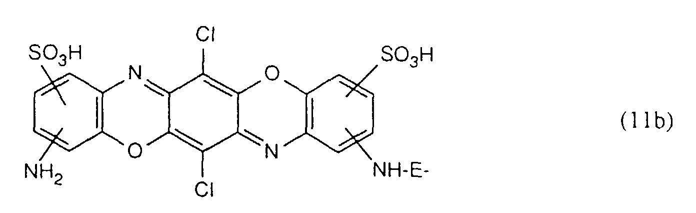 oder 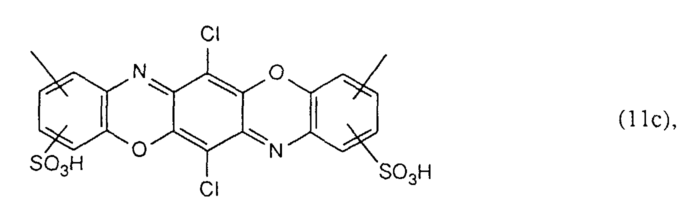 worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (11a), (11b) und (11c) durch Alkyl mit 1 bis 4 C-Atomen, Alkoxy mit 1 bis 4 C-Atomen, Acetylamino, Nitro, Halogen, Carboxy, Sulfo oder -SO₂-Y weitersubstituiert sein können, wobei Y die zuvor angegebene Bedeutung hat.

Für die Reaktivfarbstoffe der erfindungsgemässen Formel (1) sind Farbstoffreste D₁ der nachfolgenden Formeln (12) bis (23) besonders wichtig: 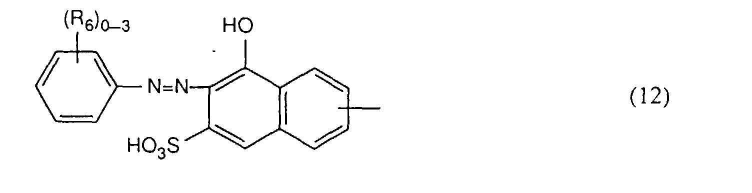 worin R₆ für C₁-C₄-Alkyl, C₁-C₄-Alkoxy, Halogen, -SO₂-Y, Carboxy und Sulfo steht; und Y β-Sulfatoethyl, β-Thiosulfatoethyl, β-Phosphatoethyl, β-Acyloxyethyl, β-Halogenethyl oder Vinyl ist. 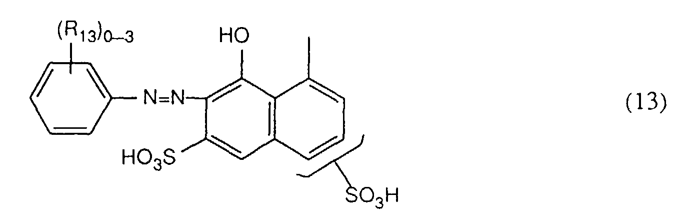 worin R₁₃ für C₁-C₄-Alkyl, C₁-C₄-Alkoxy, Halogen, -SO₂-Y, Carboxy, Sulfo und C₁-C₄-Alkoxyanilino steht; und Y β-Sulfatoethyl, β-Thiosulfatoethyl, β-Phosphatoethyl, β-Acyloxyethyl, β-Halogenethyl oder Vinyl ist. 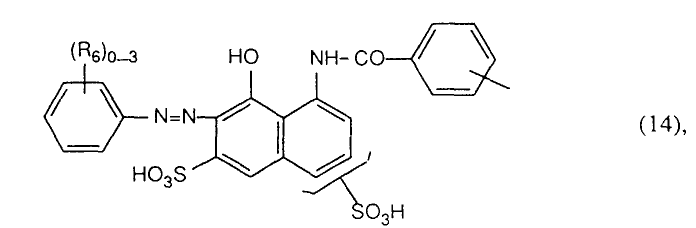 worin R₆ für C₁-C₄-Alkyl, C₁-C₄-Alkoxy, Halogen, -SO₂-Y, Carboxy und Sulfo steht; und Y β-Sulfatoethyl, β-Thiosulfatoethyl, β-Phosphatoethyl, β-Acyloxyethyl, β-Halogenethyl oder Vinyl ist. 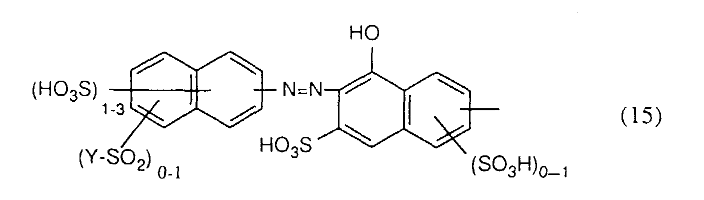 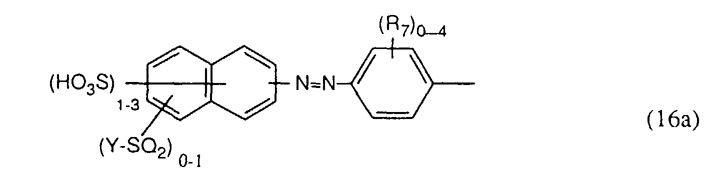 oder 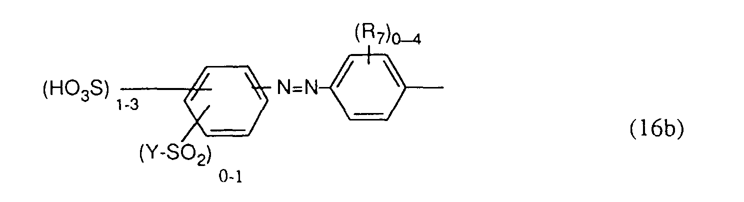 oder 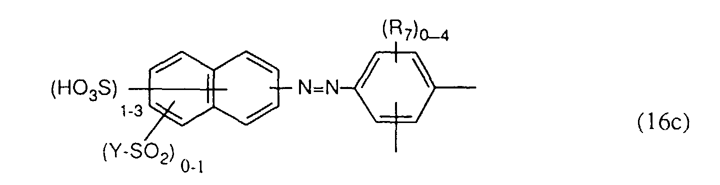 oder 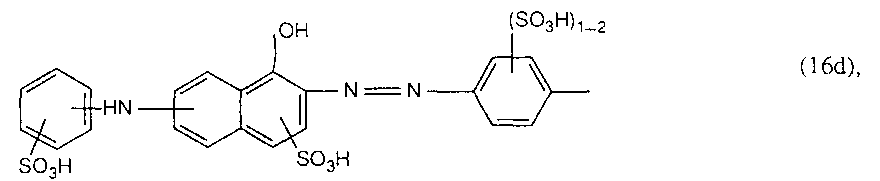 worin R₇ für Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht; und Y β-Sulfatoethyl, β-Thiosulfatoethyl, β-Phosphatoethyl, β-Acyloxyethyl, β-Halogenethyl oder Vinyl ist. 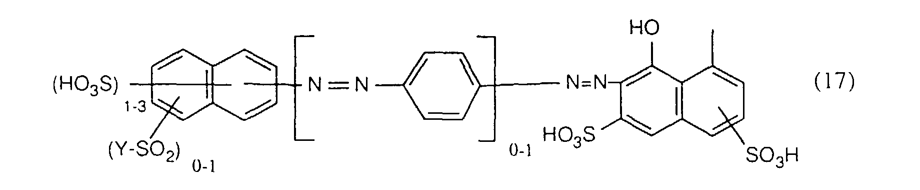 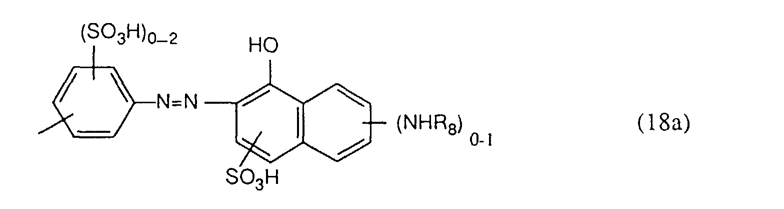 oder 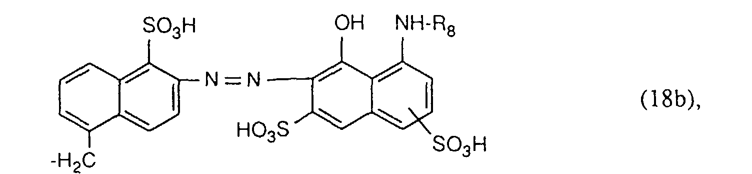 worin R₈ C₁-C₄-Alkanoyl oder Benzoyl ist; und Y β-Sulfatoethyl, β-Thiosulfatoethyl, β-Phosphatoethyl, β-Acyloxyethyl, β-Halogenethyl oder Vinyl ist. 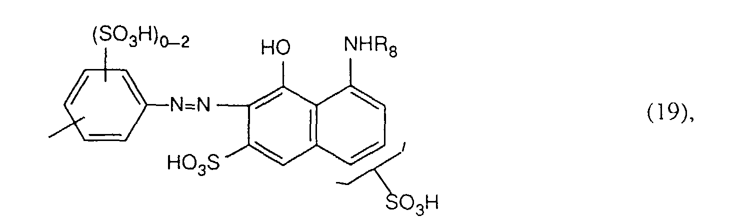 worin R₈ C₁-C₄-Alkanoyl oder Benzoyl ist. 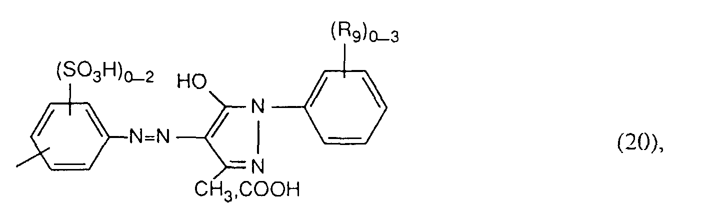 worin R₉ für C₁-C₄-Alkyl, C₁-C₄-Alkoxy, Halogen, -SO₂-Y, Carboxy und Sulfo steht; und Y β-Sulfatoethyl, β-Thiosulfatoethyl, β-Phosphatoethyl, β-Acyloxyethyl, β-Halogenethyl oder Vinyl ist. 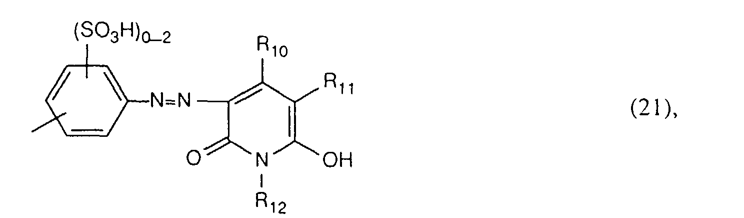 worin R₁₂ und R₁₀ unabhängig voneinander Wasserstoff, C₁-C₄-Alkyl oder Phenyl, und R₁₁ Wasserstoff, Cyano, Carbamoyl oder Sulfomethyl ist. 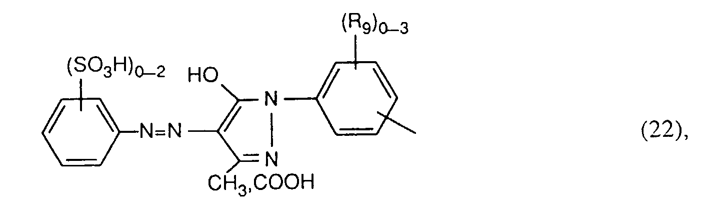 worin R₉ für C₁-C₄-Alkyl, C₁-C₄-Alkoxy, Halogen, -SO₂-Y, Carboxy und Sulfo steht; und Y β-Sulfatoethyl, β-Thiosulfatoethyl, β-Phosphatoethyl, β-Acyloxyethyl, β-Halogenethyl oder Vinyl ist. 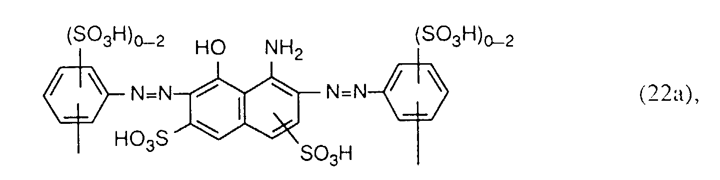 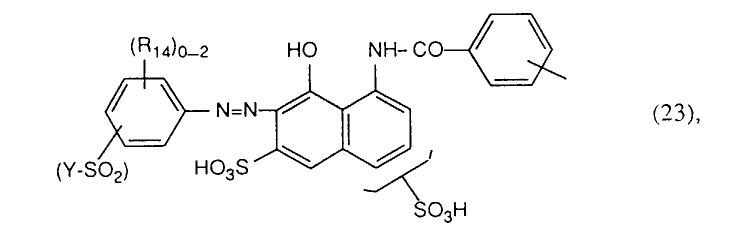 worin R₁₄ für C₁-C₄-Alkyl, C₁-C₄-Alkoxy, Halogen, Carboxy und Sulfo steht; und Y β-Sulfatoethyl, β-Thiosulfatoethyl, β-Phosphatoethyl, β-Acyloxyethyl, β-Halogenethyl oder Vinyl ist. 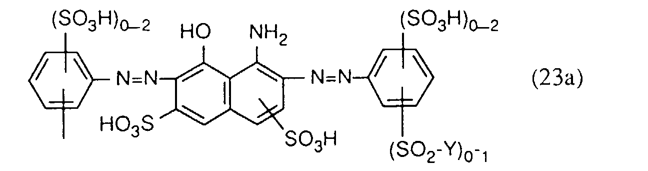 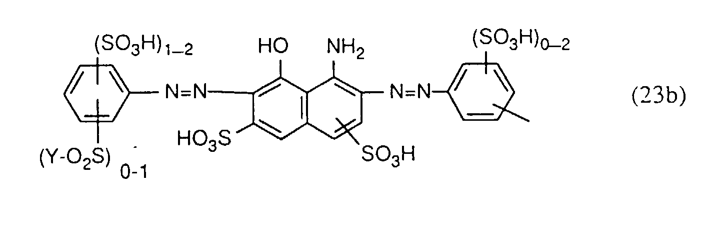 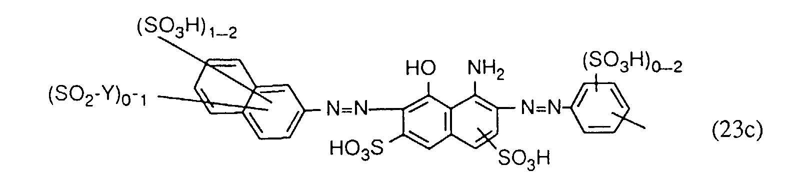 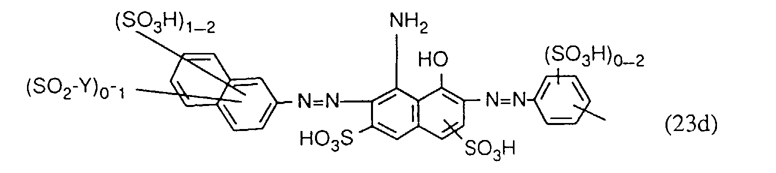 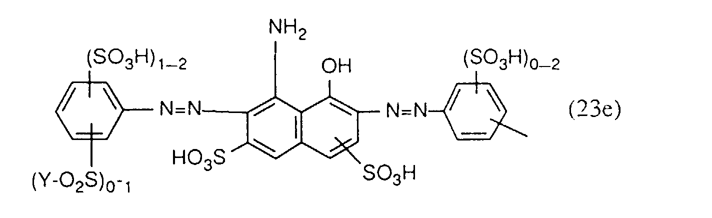 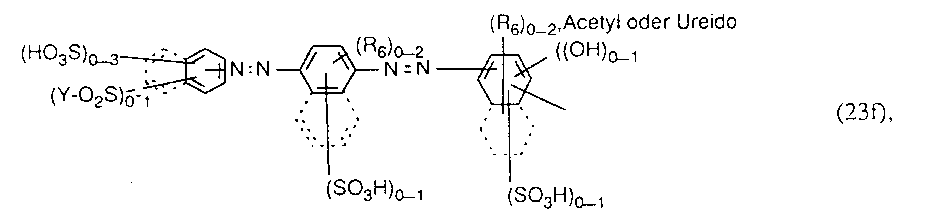 worin R₆ und Y die unter Formel (14) angegebenen Bedeutungen haben.

Im folgenden werden Beispiele für besonders bevorzugte Chromophore, die dem Rest D₁ zugrunde liegen können, genannt:

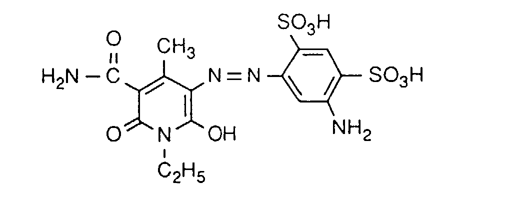

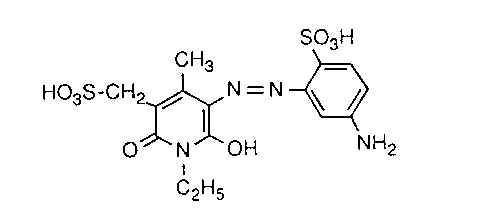

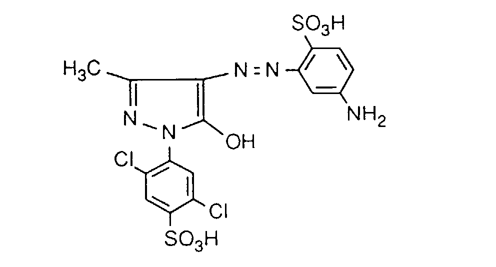

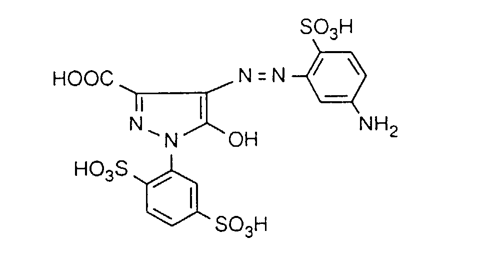

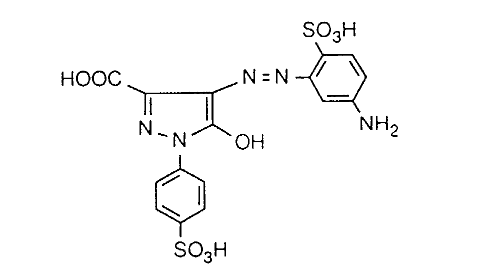

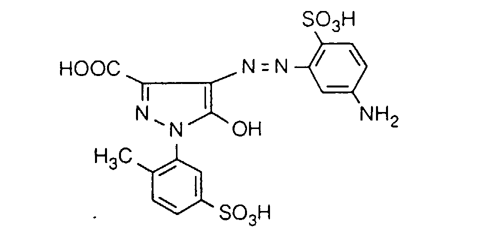

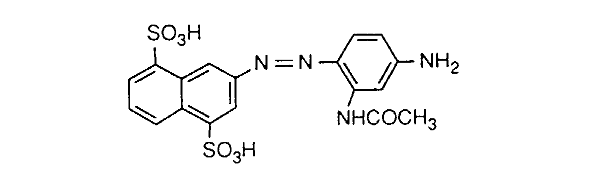

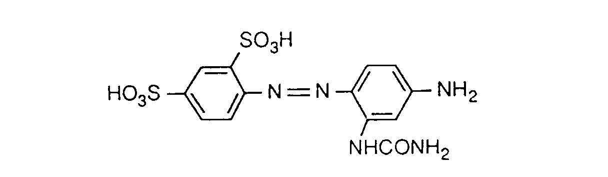

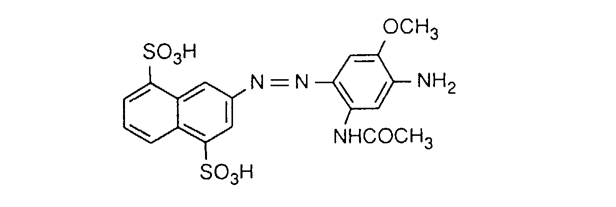

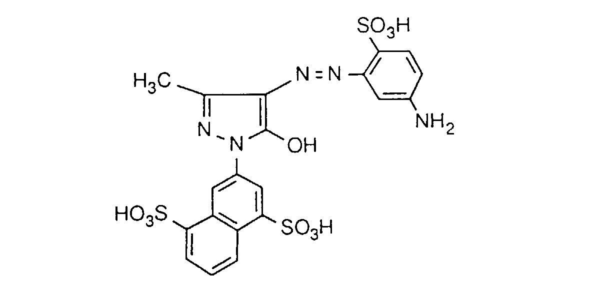

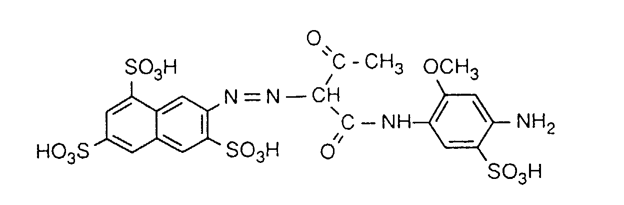

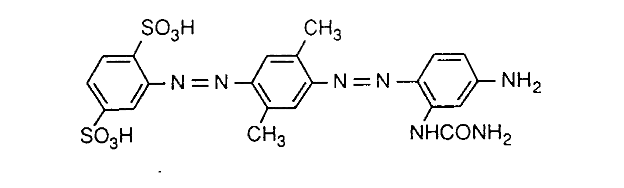

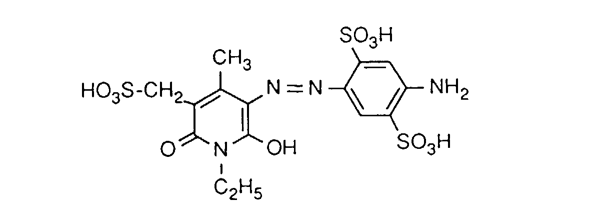

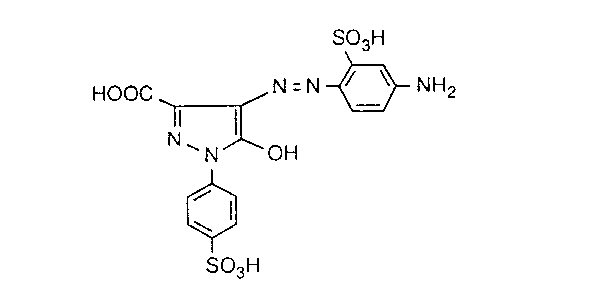

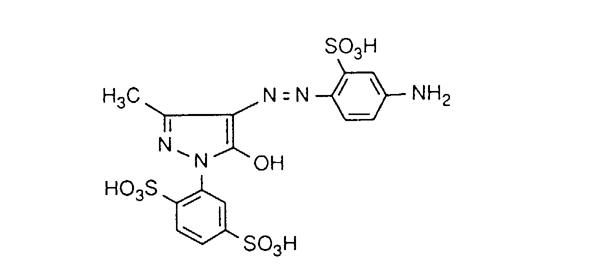

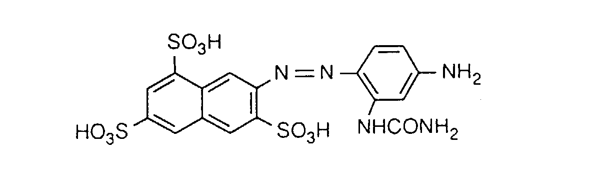

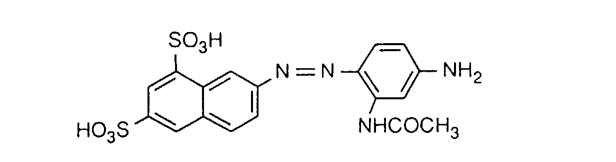

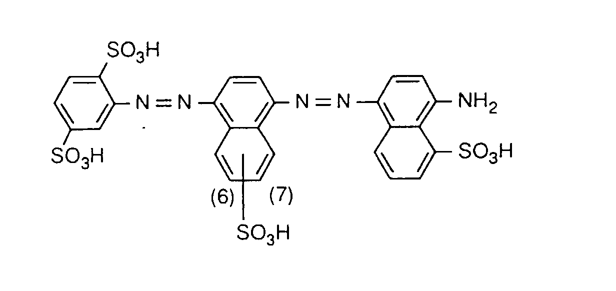

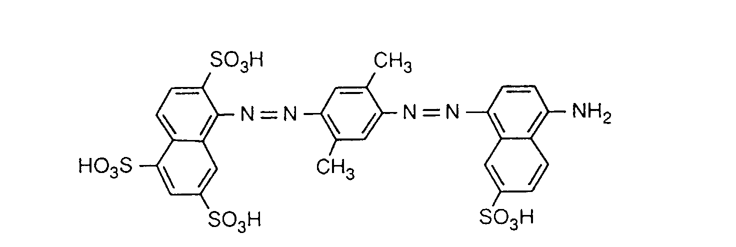

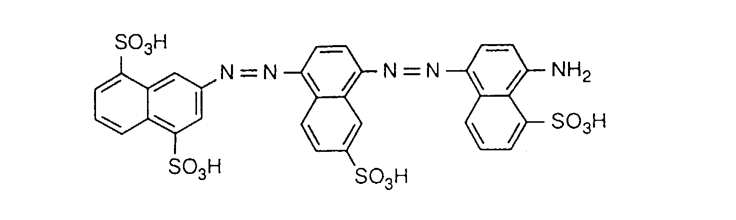

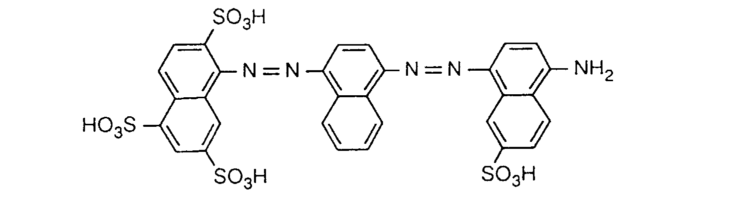

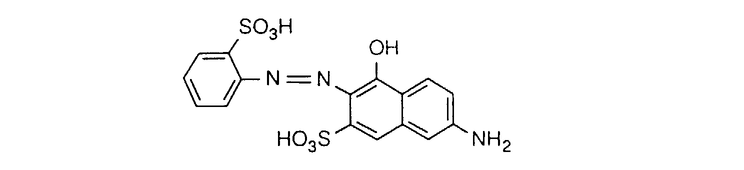

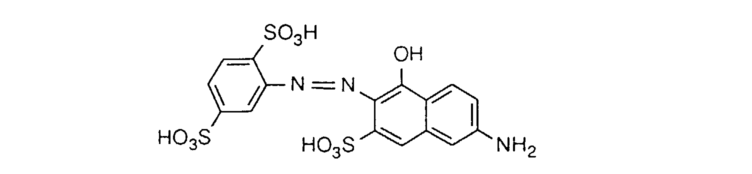

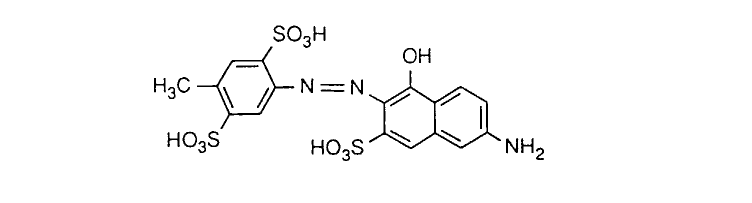

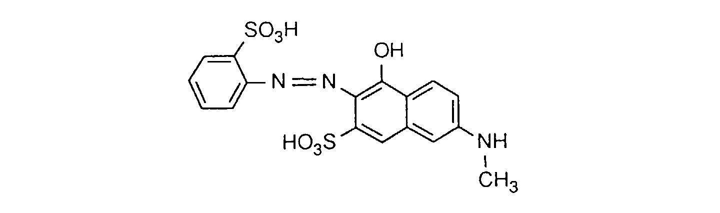

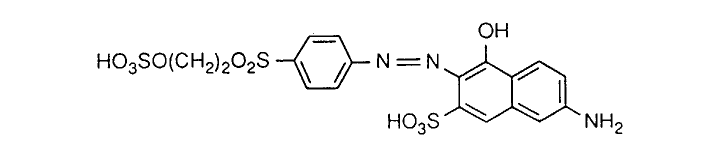

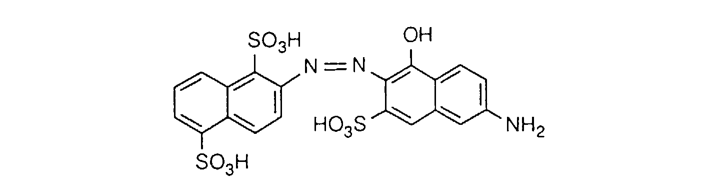

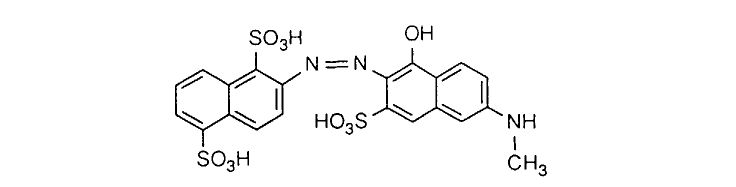

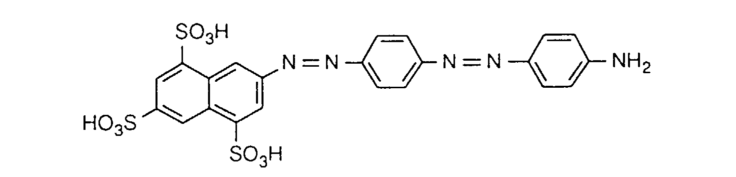

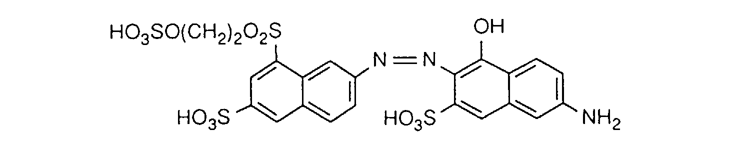

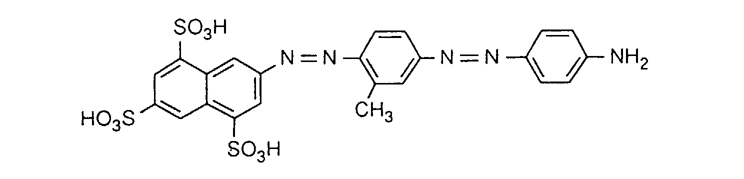

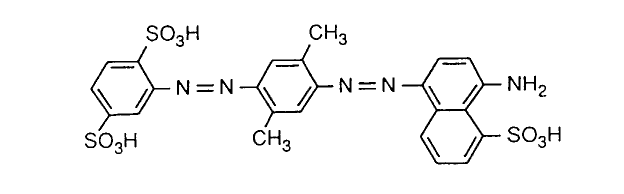

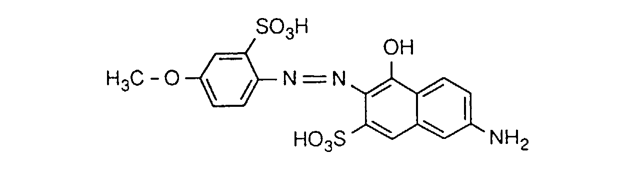

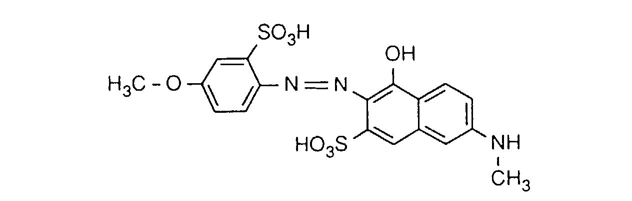

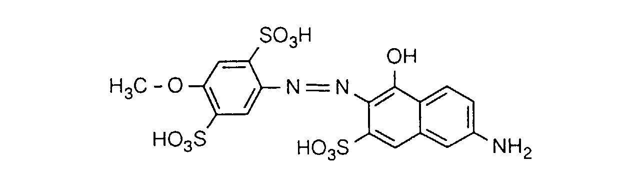

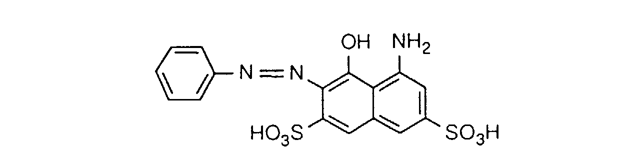

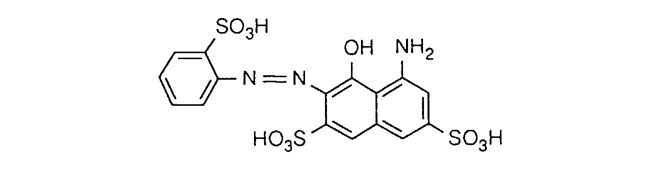

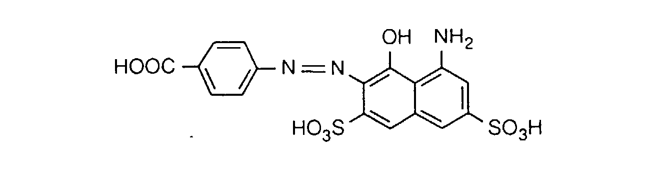

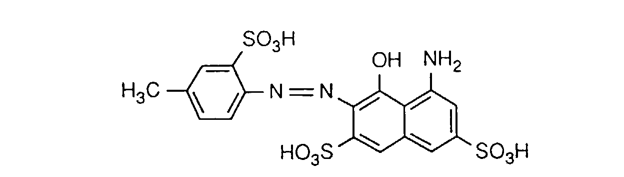

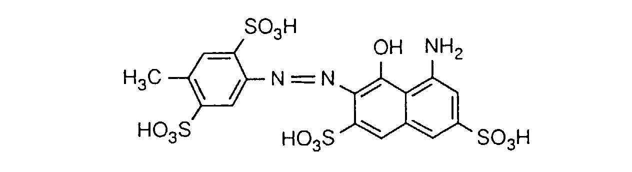

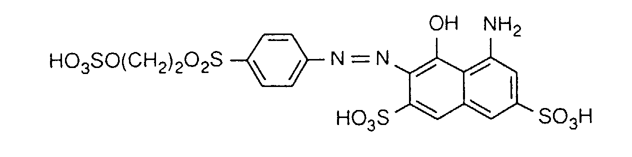

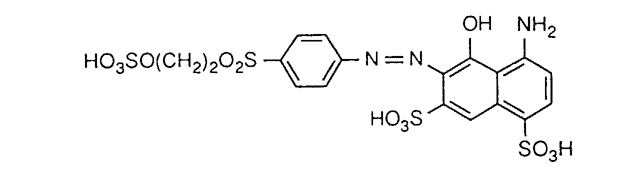

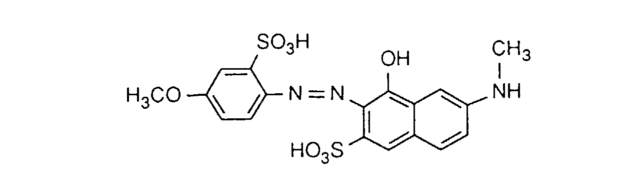

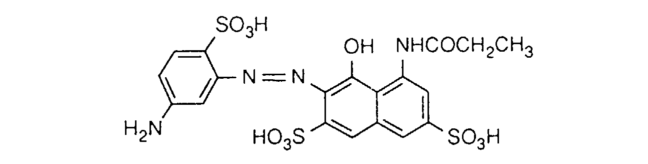

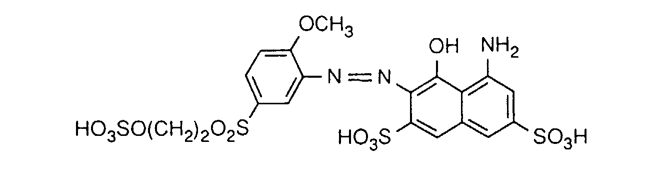

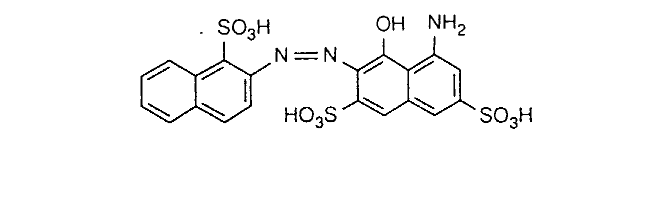

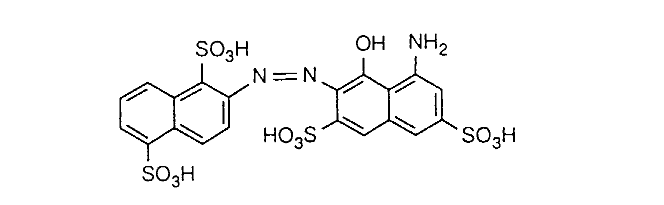

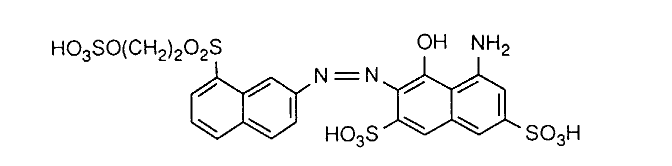

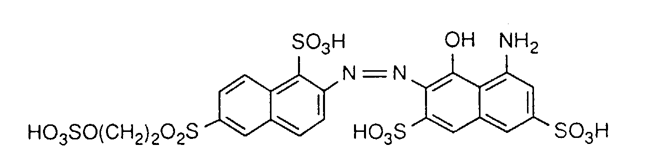

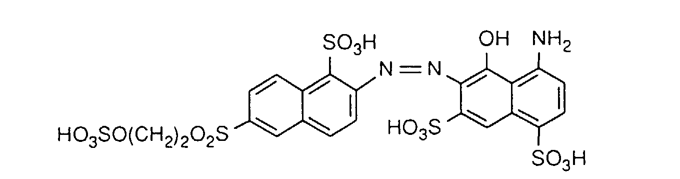

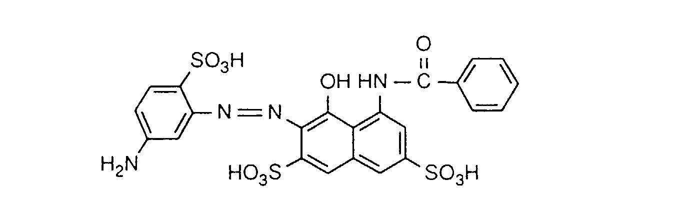

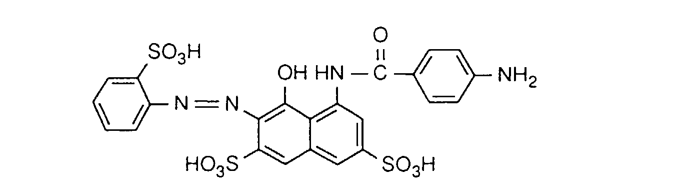

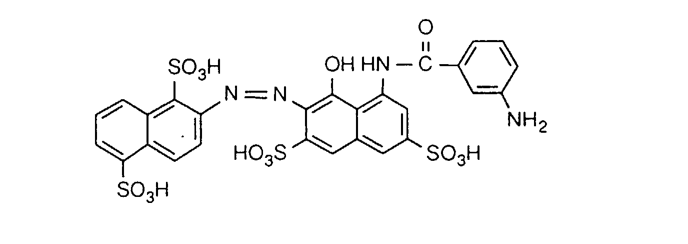

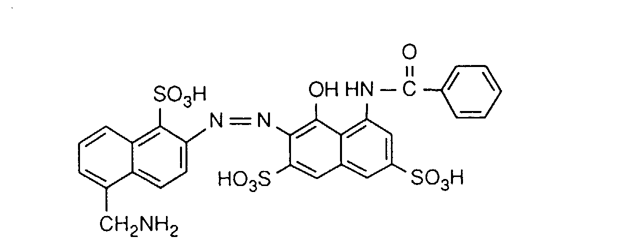

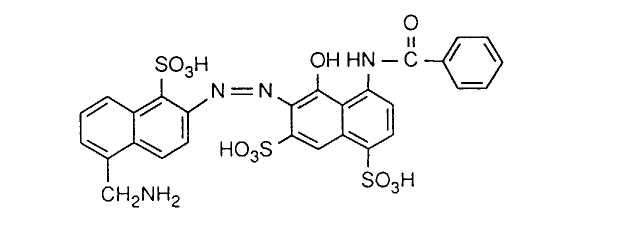

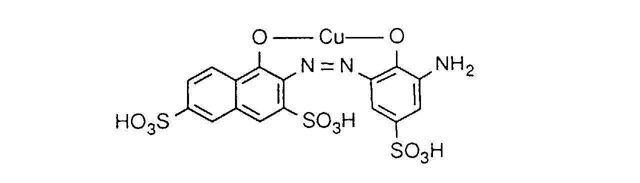

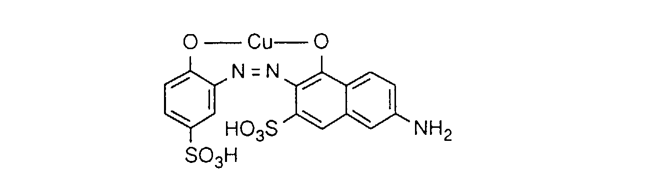

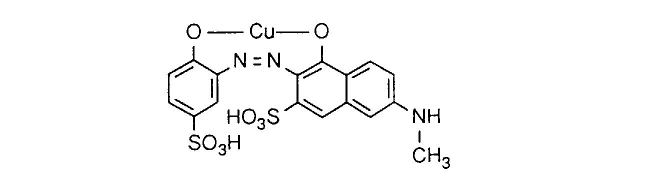

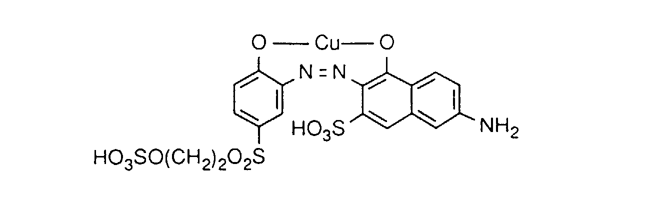

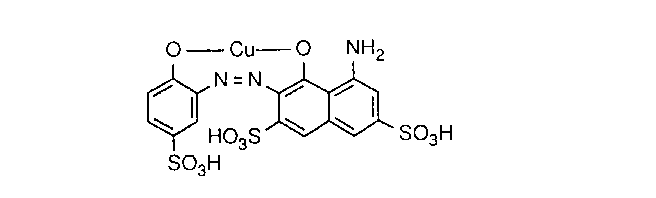

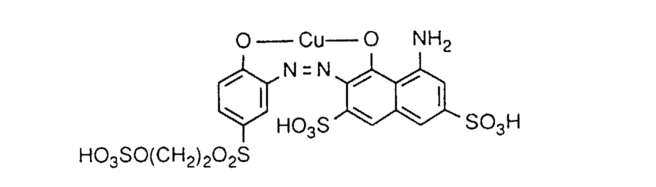

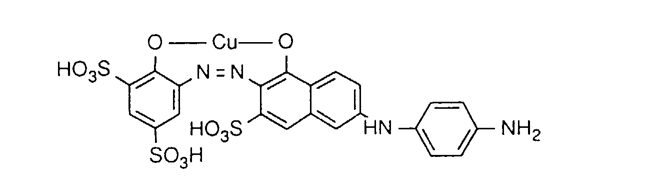

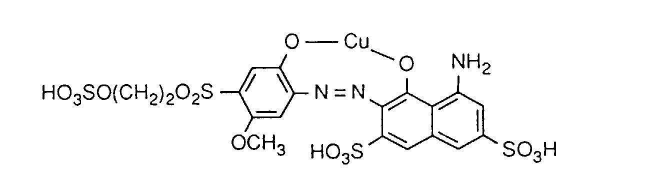

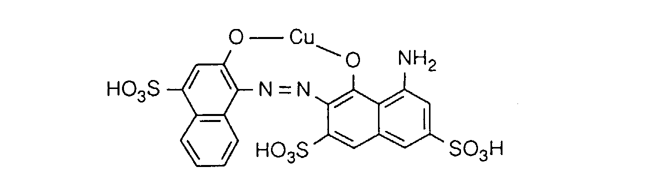

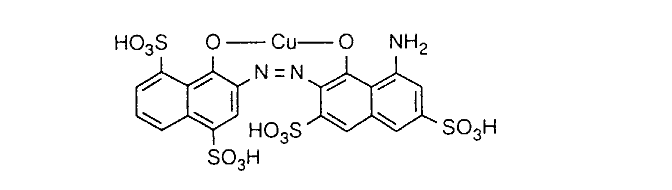

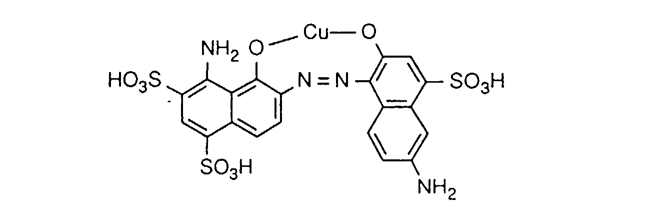

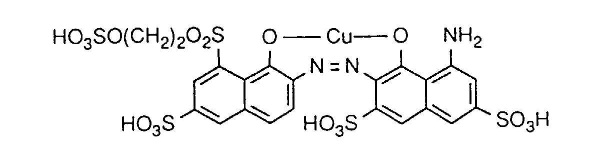

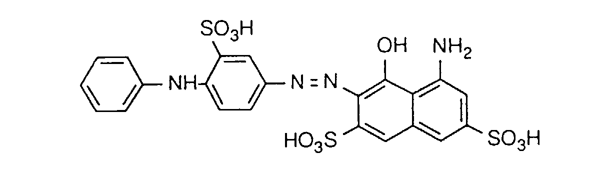

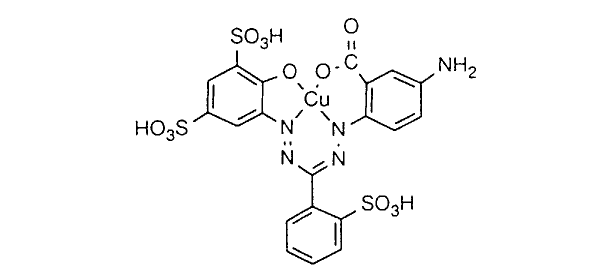

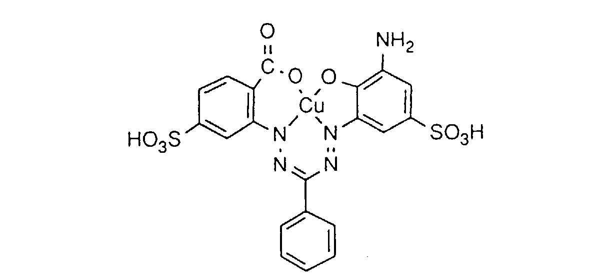

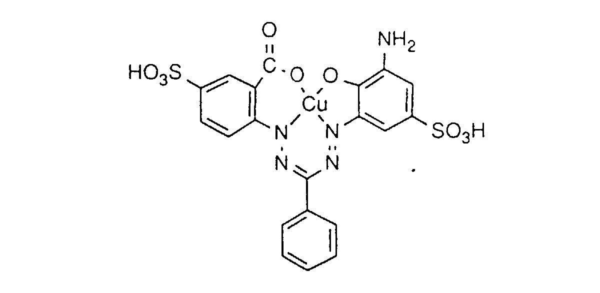

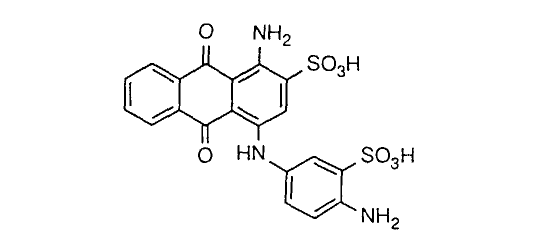

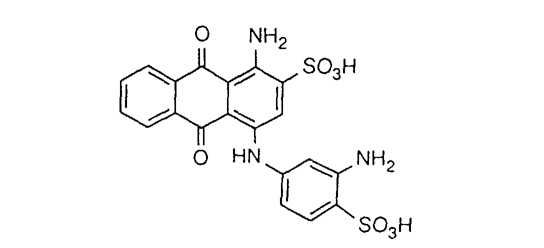

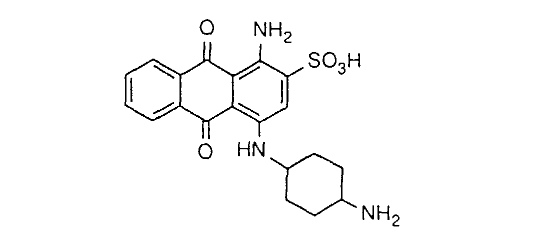

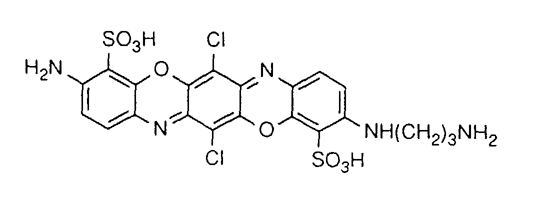

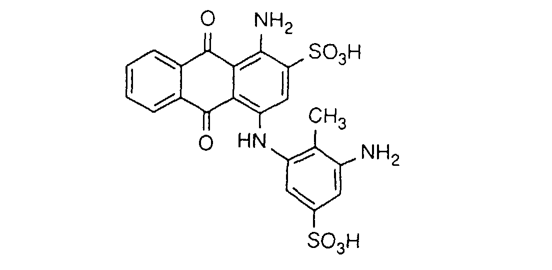

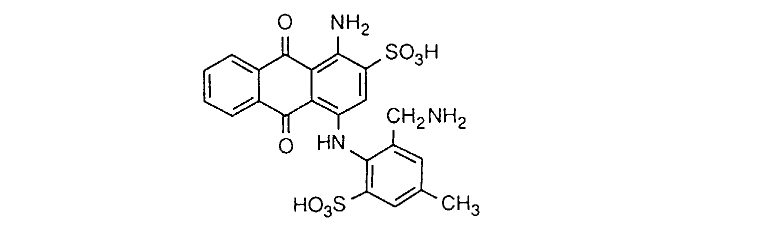

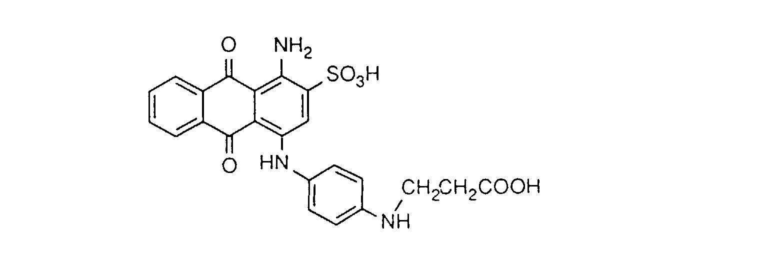

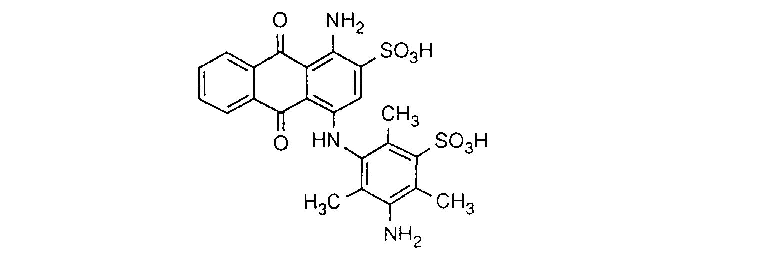

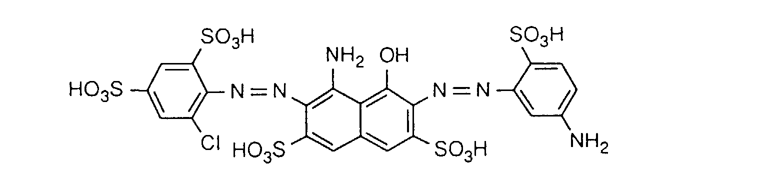

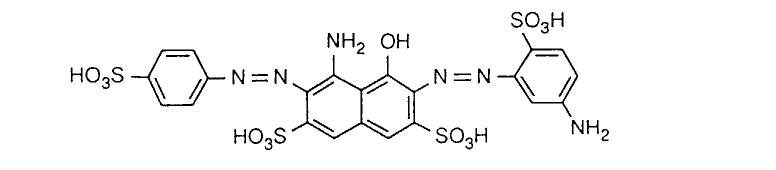

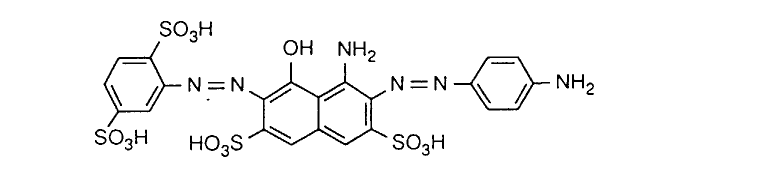

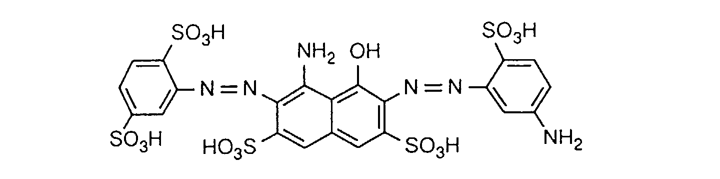

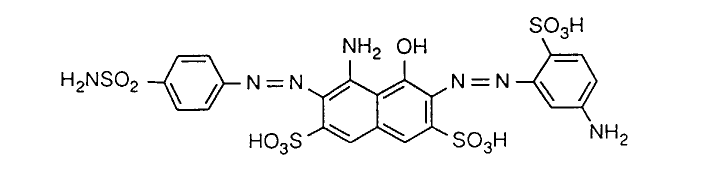

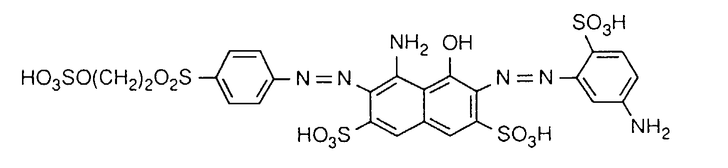

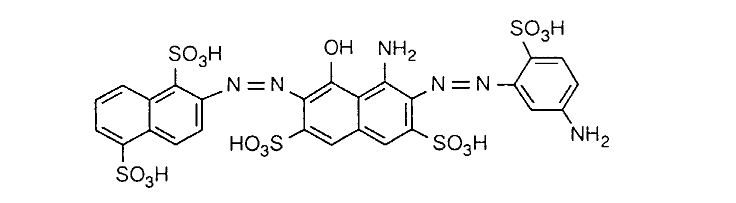

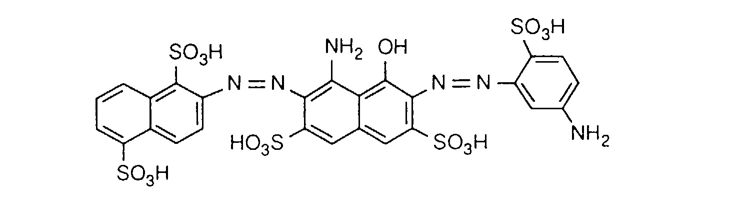

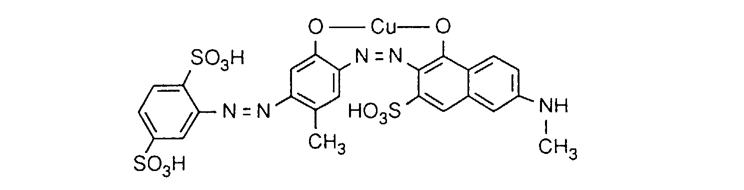

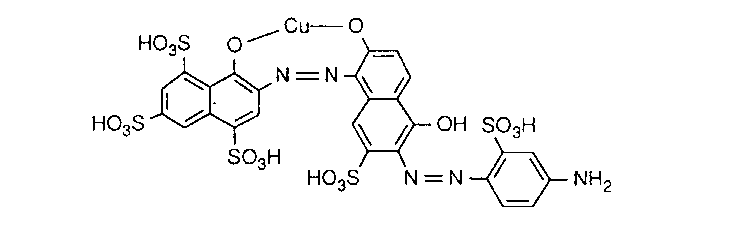

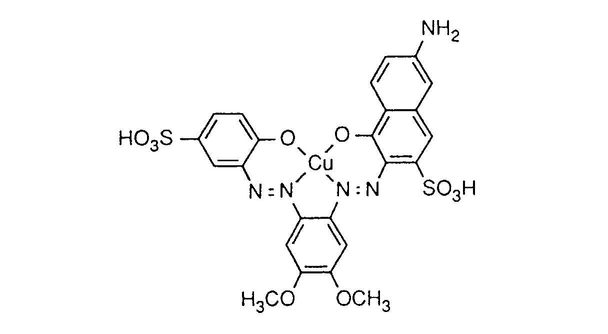

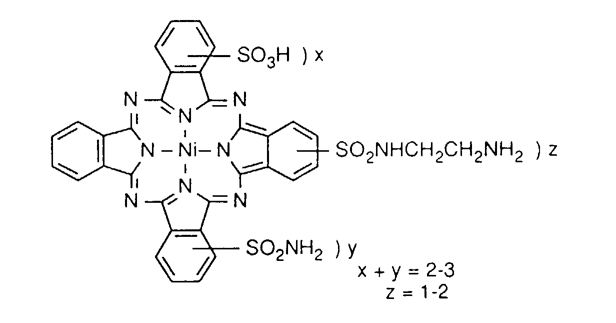

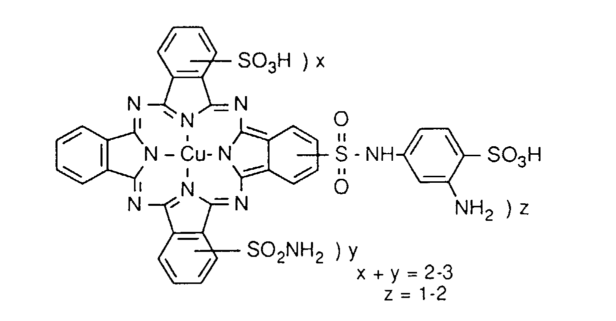

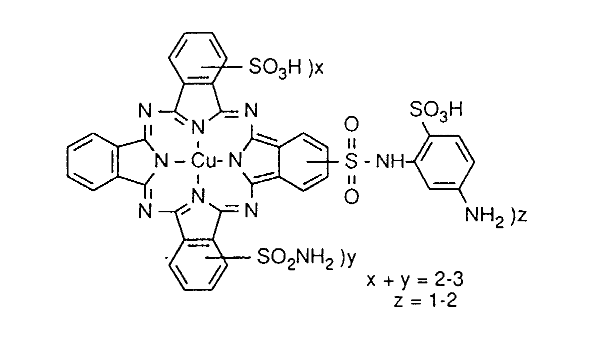

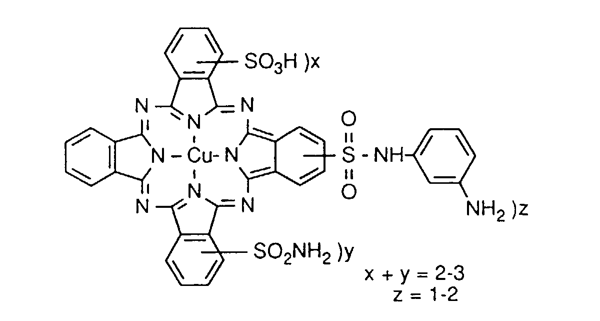

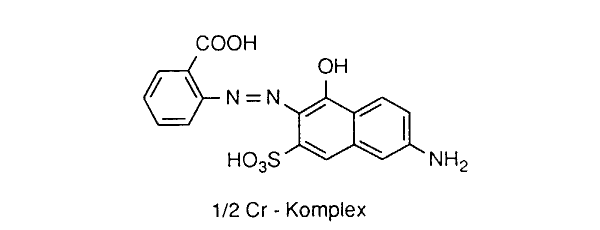

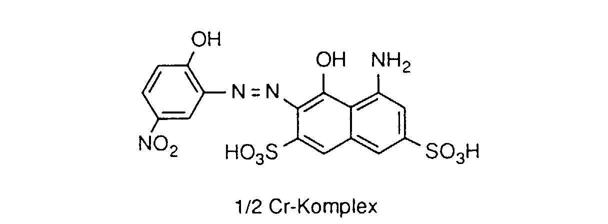

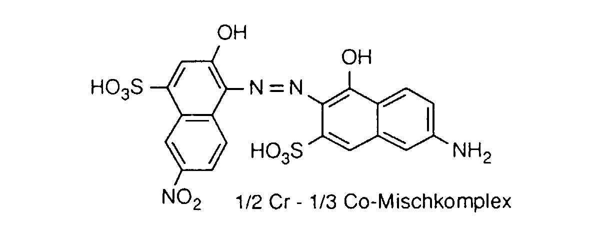

Die Verbindungen der Formel (1) weisen mindestens eine und vorzugsweise mindestens zwei wasserlöslichmachende Sulfogruppen auf, wobei diese generell in der Form der freien Säure oder vorzugsweise in Salzform vorliegen können. Geeignete Salze sind z.B. Alkali-, Erdalkali- oder Ammoniumsalze oder die Salze organischer Amine, z.B. Natrium-, Kalium-, Lithium- oder Ammoniumsalze oder das Salz des Triethanolamins.

Eine bevorzugte Ausführungsform der vorliegenden Erfindung betrifft Verbindungen der Formel 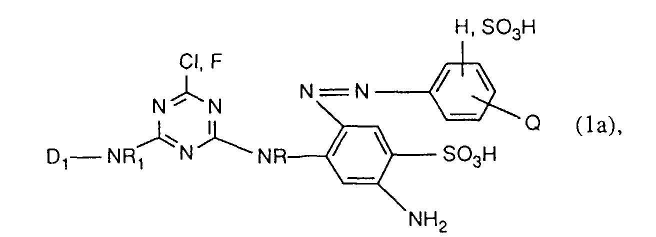 worin D₁ den Rest eines Monoazo- oder Disazochromophors bedeutet, R und R₁ unabhängig voneinander je Wasserstoff, Methyl oder Ethyl sind und Q für einen Rest der Formel

-SO₂-Y (5a)

oder

-CONH-(CH₂)₂₋₃-SO₂-Y (5bʺ)

worin Y Vinyl oder β-Sulfatoethyl bedeutet, steht.

Eine besonders bevorzugte Ausführungsform der vorliegenden Erfindung betrifft Verbindungen der oben angegebenen Formel (1a), welche dadurch gekennzeichnet sind, dass D₁ ein Rest der Formel 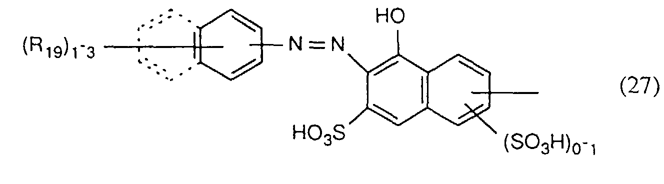 oder 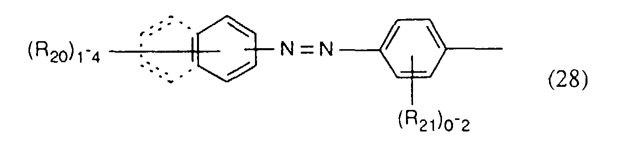 ist, und worin (R₁₉)₁₋₃ für 1 bis 3 gleiche oder verschiedene Substituenten R₁₉ aus der Gruppe Sulfo, Methoxy, Methyl und Rest der Formel -SO₂-Y, worin Y Vinyl oder β-Sulfatoethyl ist, steht, (R₂₀)₁₋₄ für 1 bis 4 gleiche oder verschiedene Substituenten R₂₀ aus der Gruppe Sulfo, Hydroxy, Benzoylamino, Acetylamino und Propionylamino steht und (R₂₁)₀₋₂ für 0 bis 2 gleiche oder verschiedene Substituenten aus der Gruppe Methyl, Methoxy, 2-Hydroxyethoxy, 2-Sulfatoethoxy, Sulfo, Acetylamino und Ureido steht.

Eine weitere besonders bevorzugte Ausführungsform der Erfindung betrifft Verbindungen der oben angegebenen Formel (1a), welche dadurch gekennzeichnet sind, dass D₁ ein Rest der Formel 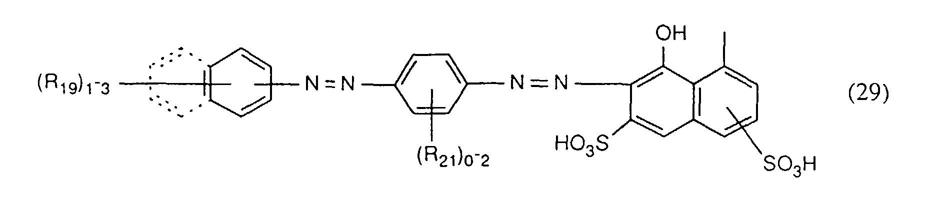 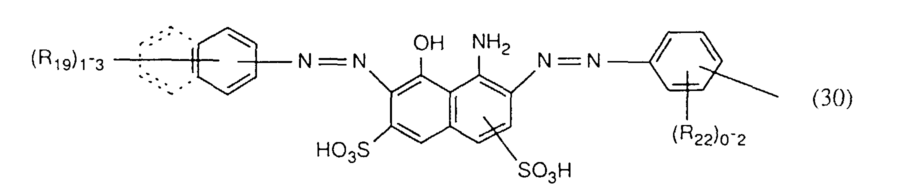 ist, und worin (R₁₉)₁₋₃ und (R₂₁)₀₋₂ die oben angegebene Bedeutung haben und (R₂₂)₀₋₂ für 0 bis 2 gleiche oder verschiedene Substituenten R₂₂ aus der Gruppe Sulfo, Chlor, Methyl und Methoxy steht.

Die Reaktivfarbstoffe der Formel (1) können in an sich bekannter Weise hergestellt werden, z.B. indem man in etwa ein Moläquivalent eines organischen Farbstoffs der Formel

D₁-NHR₁ (24),

in etwa ein Moläquivalent der Verbindung der Formel

D-NHR (25)

oder geeignete Vorprodukte der Verbindungen der Formeln (24) oder (25) und etwa ein Moläquivalent eines Halotriazins, vorzugsweise 2,4,6-Trichlor- oder 2,4,6-Trifluor-s-triazin, in beliebiger Reihenfolge miteinander umsetzt oder, im Fall der Verwendung von Vorprodukten der der Verbindungen der Formeln (24) oder (25), die erhaltenen Zwischenprodukte in die gewünschten Farbstoffe überführt und gegebenenfalls eine weitere Umwandlungsreaktion, z.B. zur Umwandlung eines Halogenatoms am Triazin in einen beliebigen Rest X, anschliesst; hierbei gelten für D, D₁, R, R₁ und X jeweils die zuvor angegebenen Bedeutungen und Bevorzugungen.
Bei der durch den Einsatz von Vorprodukten der Verbindungen der Formeln (24) oder (25) bedingten Umwandlung von Zwischenprodukten in die Endfarbstoffe handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei sich die Reihenfolge der einfachen an sich bekannten Reaktionen zwischen den einzelnen Reaktionskomponenten nach den besonderen Bedingungen richtet.

Eine bevorzugte Variante zur Herstellung der erfindungsgemässen Farbstoffe ist dadurch gekennzeichnet, dass man ein Moläquivalent 2,4,6-Trichlor- oder 2,4,6-Trifluor-s-triazin zunächst mit einem Moläquivalent der Verbindung der zuvor angegebenen Formel (24) bei einem in etwa neutralen pH-Wert und niedriger Temperatur, z.B. 0-5°C, und dann mit einem Moläquivalent 2,4-Diaminobenzolsulfonsäure bei einem leicht sauren bis neutralen pH-Wert, z.B. pH 4,5-7,5, und einer Temperatur von z.B. 0-30°C umsetzt und die erhaltene Verbindung mit einem Moläquivalent einer in üblicher Weise diazotierten Verbindung der Formel

Z-NH₂ (26),

worin Z die zuvor angegebene Bedeutung hat, bei einem neutralen bis leicht sauren pH-Wert und einer Temperatur von z.B. 0-20°C kuppelt.

Gegenstand der Erfindung ist ferner ein Verfahren zum Färben und Bedrucken von cellulosehaltigen Fasermaterialien mit den erfindungsgemässen Farbstoffen. Als Fasermaterialien kommen beispielsweise die natürlichen Cellulosefasern, wie Baumwolle, Leinen und Hanf, sowie Zellstoff und regenerierte Cellulose in Betracht. Die Farbstoffe sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült. Zum Färben und Bedrucken werden die üblichen Färbe- bzw. Druckverfahren angewendet.

Für das erfindungsgemässe Verfahren können die Mengen, in denen die Reaktivfarbstoffe in den Färbebädern oder Druckpasten verwendet werden, je nach der gewünschten Farbtiefe schwanken, im allgemeinen haben sich Mengen von 0,01 bis 10 Gewichtsprozent, insbesondere 0,1 bis 6 Gewichtsprozent, bezogen auf das Färbegut, als vorteilhaft erwiesen.

Die Färbeflotten können die allgemein üblichen Zusätze enthalten, beispielsweise die wässrigen Lösungen anorganischer Salze, z.B. von Alkalichloriden oder Alkalisulfaten, Alkalihydroxide, Harnstoff, Verdickungen, wie z.B. Alginatverdickungen, wasserlösliche Cellulosealkyläther sowie Dispergierhilfsmittel, Egalisierhilfsmittel und Migrationsinhibitoren, ferner Natrium-m-nitrobenzolsulfonat und als weitere Verdickungsmittel beispielsweise Methylcellulose, Stärkeäther, Emulsionsverdickungen, vorzugsweise ein Alginat, z.B. Natriumalginat, sowie Netzmittel.

Bevorzugt für das erfindungsgemässe Verfahren ist das Färben nach der Ausziehmethode. Das Färben erfolgt hierbei in der Regel in wässrigem Medium, bei einem Flottenverhältnis von beispielsweise 1:2 bis 1:60, insbesondere einem Flottenverhältnis von 1:5 bis 1:20, einem pH des Färbebades von z.B. 6 bis 13 und einer Temperatur von beispielsweise 40 bis 110°C, insbesondere einer Temperatur von 60 bis 95°C.

Die erfindungsgemässen Farbstoffe zeichnen sich durch ein gutes Fixiervermögen und ein sehr gutes Aufbauvermögen aus. Sie zeichnen sich durch einen hohen Ausziehgrad aus und können nach dem Ausziehverfahren über einen sehr grossen Temperaturbereich eingesetzt werden und eignen sich deshalb auch zum Färben von Baumwolle-Polyester-Mischgeweben nach den für solche Gewebe empfohlenen Bedingungen. Die erfindungsgemässen Farbstoffmischungen eignen sich auch zum Druck, vor allem auf Baumwolle, oder von Mischgeweben, die z.B. Wolle oder Seide enthalten.

Die mit den erfindungsgemässen Farbstoffe hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, See - wasser-, Ueberfärbe- und Schweissechtheiten, sowie eine gute Plissierechtheit und Bügelechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: 9,3 Teile Cyanurchlorid werden in 100 Teilen Eis/Wasser-Mischung suspendiert und gerührt. Zu dieser Suspension wird eine Lösung von 27 Teilen 7-(4-Amino-2-ureido-phenylazo)-naphthalin-1,3,6-trisulfonsäur e in 200 Teilen Wasser bei 0-5°C und pH ca. 7 zugetropft und die dabei entstehende Salzsäure durch Zugabe von 2N Natriumhydroxidlösung neutralisiert (Dauer ca. 1 h). Anschliessend wird eine Lösung von 9,5 Teilen 2,4-Diaminobenzolsulfonsäure in 80 Teilen Wasser bei 3-5°C und pH 5-5,5 zur Reaktionslösung getropft und letztere anschliessend weitere 2 bis 3 Stunden bei 5-30°C und pH 5-7,5 gerührt. Anschliessend wird der pH-Wert auf 4,5 eingestellt.

14,5 Teile 4-(2-sulfatoethylsulfonyl)-anilin werden in 130 Teilen Wasser in üblicher Weise diazotiert und die Diazoniumsalzlösung innerhalb von ca. 1 Stunde zur Lösung der Kupplungskomponente getropft. Nach ca. 2 Stunden bei 2-14°C und pH 4,5-5,5 ist die Reaktion beendet. Die erhaltene Farbstofflösung wird entsalzt und gefriergetrocknet; man erhält den Farbstoff der Formel 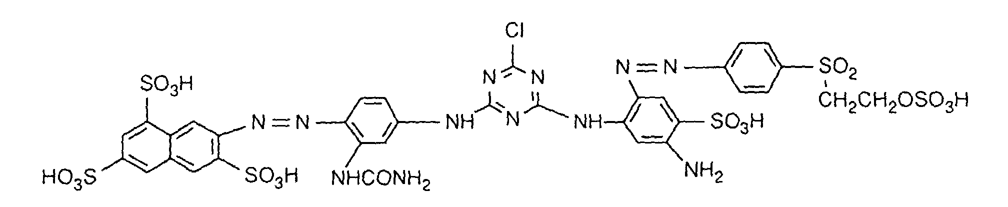 der Cellulosefasern in goldgelben Tönen mit guten Allgemeinechtheiten färbt.

Beispiel 2: 27 Teile 7-(4-Amino-2-ureido-phenylazo)-naphthalin-1,3,6-trisulfonsäur e werden in 400 Teilen Wasser neutral gelöst und innerhalb von ca. 30 Minuten 8,5 Teile Cyanurfluorid bei 0-2°C zugetropft. Zur Reaktionslösung werden 10 Teile 2,4-Diaminobenzolsulfonsäure in 80 Teilen Wasser bei 2-20°C und pH 5,5-6 zugetropft (Dauer ca. 3 Stunden) und die erhaltene Lösung anschliessend auf 0-5°C gekühlt.

14,5 Teile 4-(2-sulfatoethylsulfonyl)-anilin werden in 130 Teilen Wasser in üblicher Weise diazotiert und die Diazoniumsalzlösung zur Lösung der Kupplungskomponente getropft. Die Kupplung findet bei 2-15°C und pH 5-7 statt. Nach beendeter Reaktion wird der pH-Wert auf 10 erhöht, die Reaktionslösung ca. 20 Minuten bei Raumtemperatur gerührt und neutralisiert. Die erhaltene Farbstofflösung wird entsalzt und gefriergetrocknet; man erhält den Farbstoff der Formel 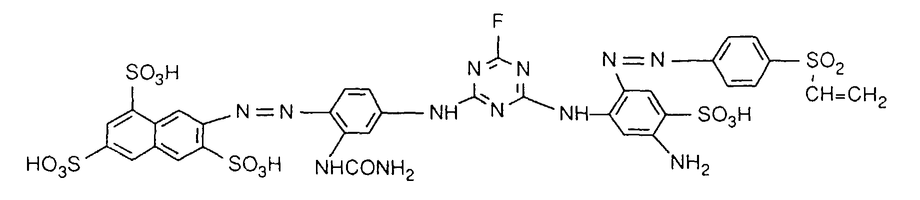 der Cellulosefasern in kräftigen gelben Tönen mit guten Allgemeinechtheiten färbt.

Beispiel 3: 14,8 Teile Cyanurchlorid werden in 150 Teilen Eis/Wasser-Mischung suspendiert und gerührt. Zu dieser Suspension wird eine Lösung von 42,2 Teilen 8-Amino-1-hydroxy-2-(1-sulfonaphthalin-2-yl-azo)-naphthalin-3,6-disulfonsäure in 600 Teilen Wasser bei 0-5°C und pH ca. 7 zugetropft und die dabei entstehende Salzsäure durch Zugabe von 2N Natriumhydroxidlösung neutralisiert (Dauer ca. 3 Stunden). Anschliessend wird eine Lösung von 15,9 Teilen 2,4-Diaminobenzolsulfonsäure in 120 Teilen Wasser zur Reaktionslösung getropft, wobei der pH-Wert auf ca. 3,5 absinkt. Die Reaktionslösung wird anschliessend ca. 2 bis 3 Stunden bei 5-30°C und pH 3,5-5 gerührt und dann auf 0-5°C abgekühlt.

22,5 Teile 4-(2-sulfatoethylsulfonyl)-anilin werden in 150 Teilen Wasser in üblicher Weise diazotiert, die Diazoniumsalzlösung zur Lösung der Kupplungskomponente getropft und bei 0-25°C und pH 4-6 gekuppelt. Die erhaltene Farbstofflösung wird entsalzt und gefriergetrocknet; man erhält den Farbstoff der Formel 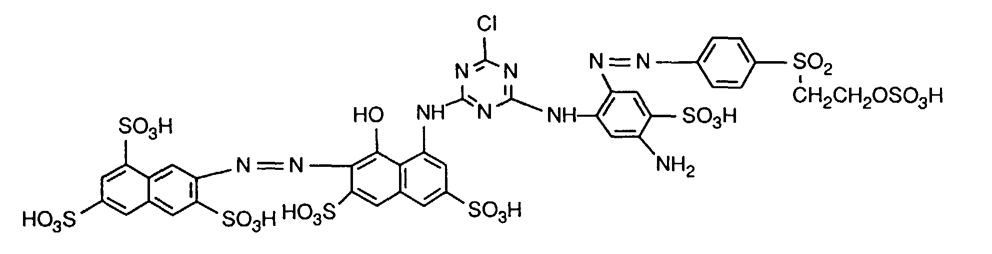 der Cellulosefasern in gelbstichigen roten Tönen mit guten Allgemeinechtheiten färbt.

Beispiele 4 bis 87: Analog wie in den Beispielen 1 bis 3 beschrieben lassen sich weitere Farbstoffe der allgemeinen Formel 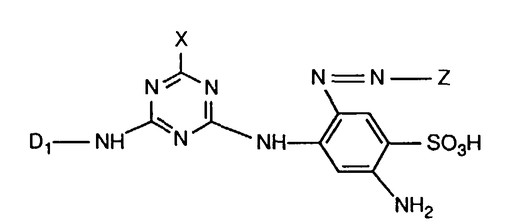 aus den in der Tabelle 1 angegebenen Chromophoren D₁-NHR und den Diazokomponenten Z-NH₂ herstellen; die Bedeutung der Variablen B₁ bis B₈ ist hierbei im Anschluss an Beispiel 87 angegeben.

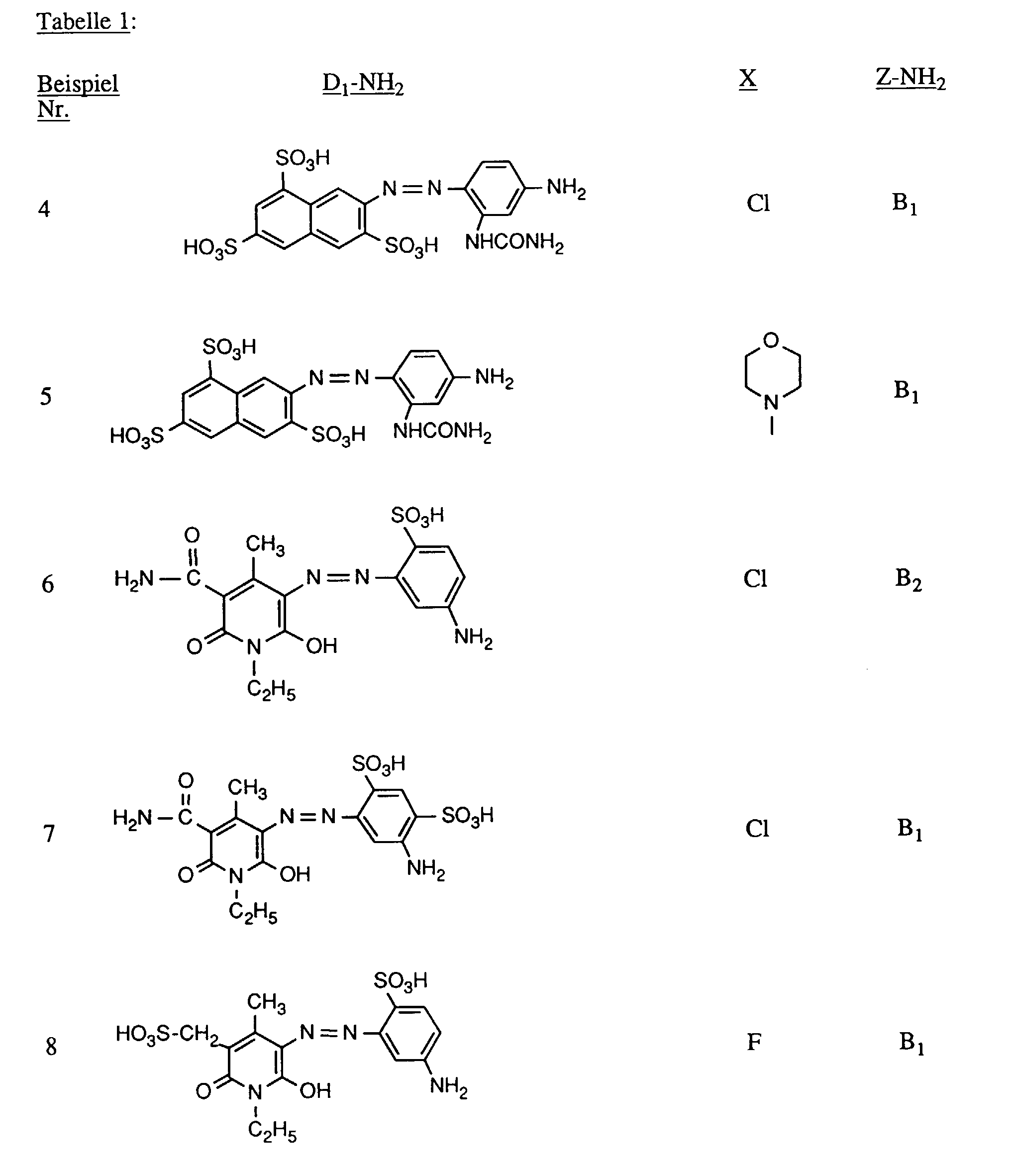

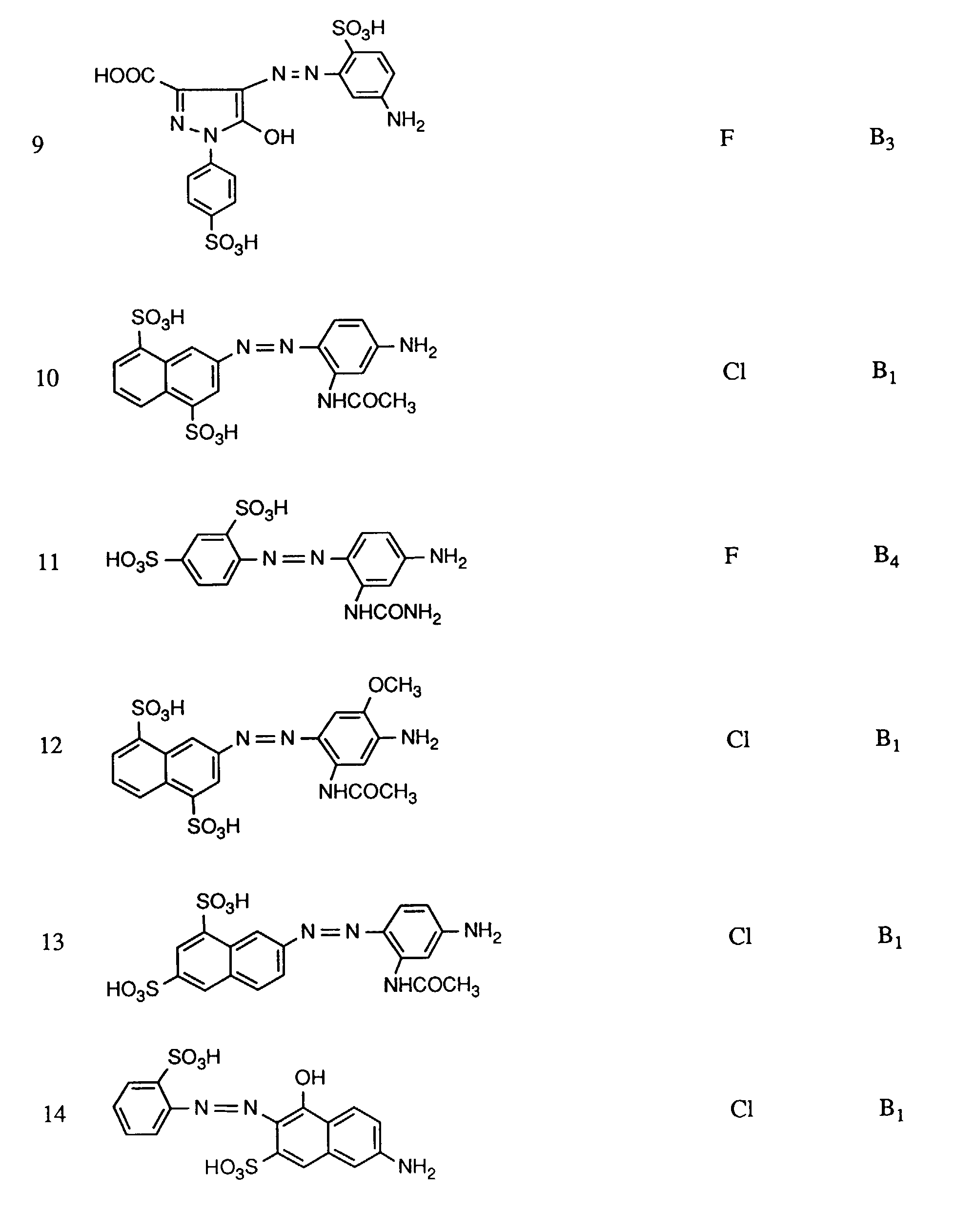

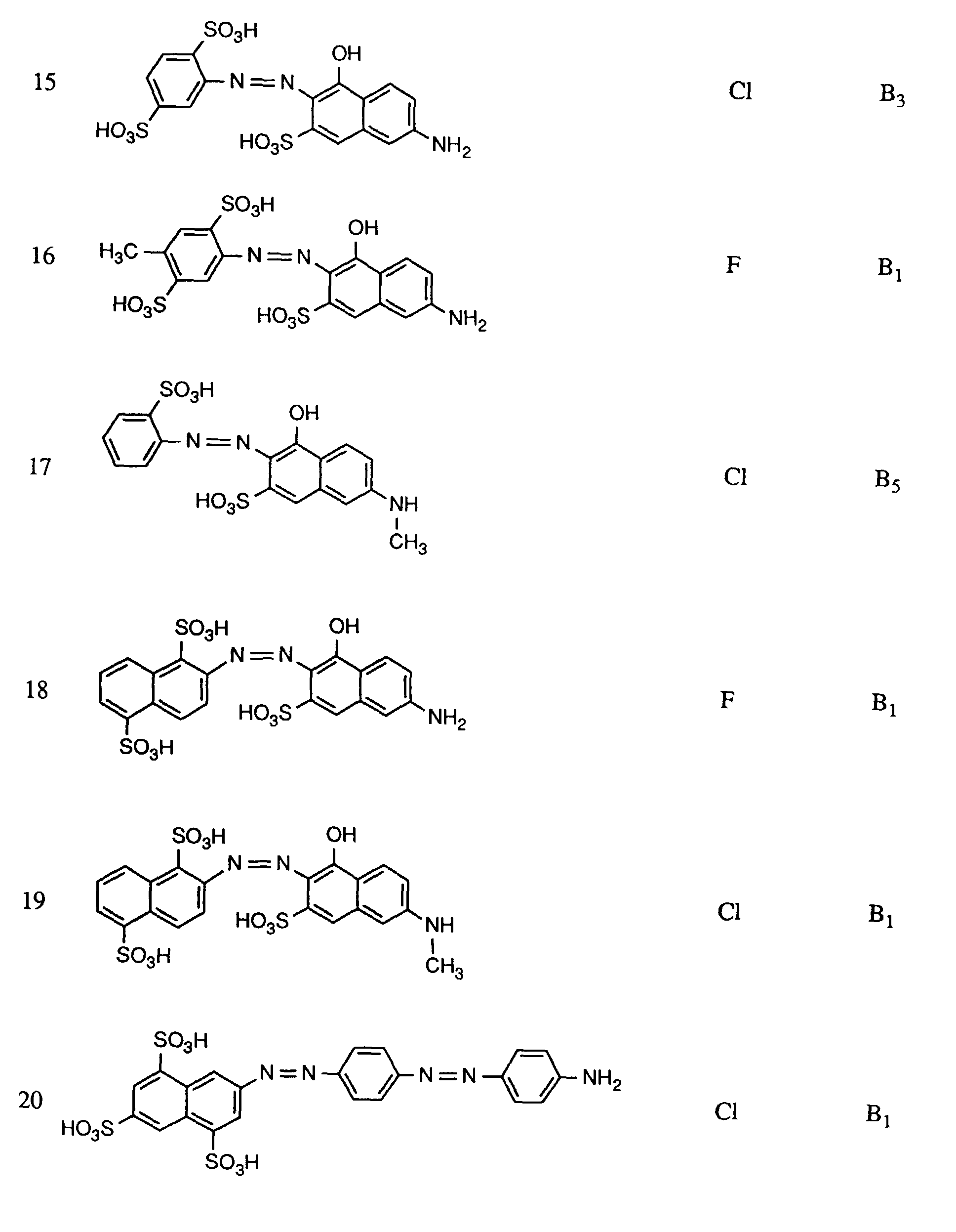

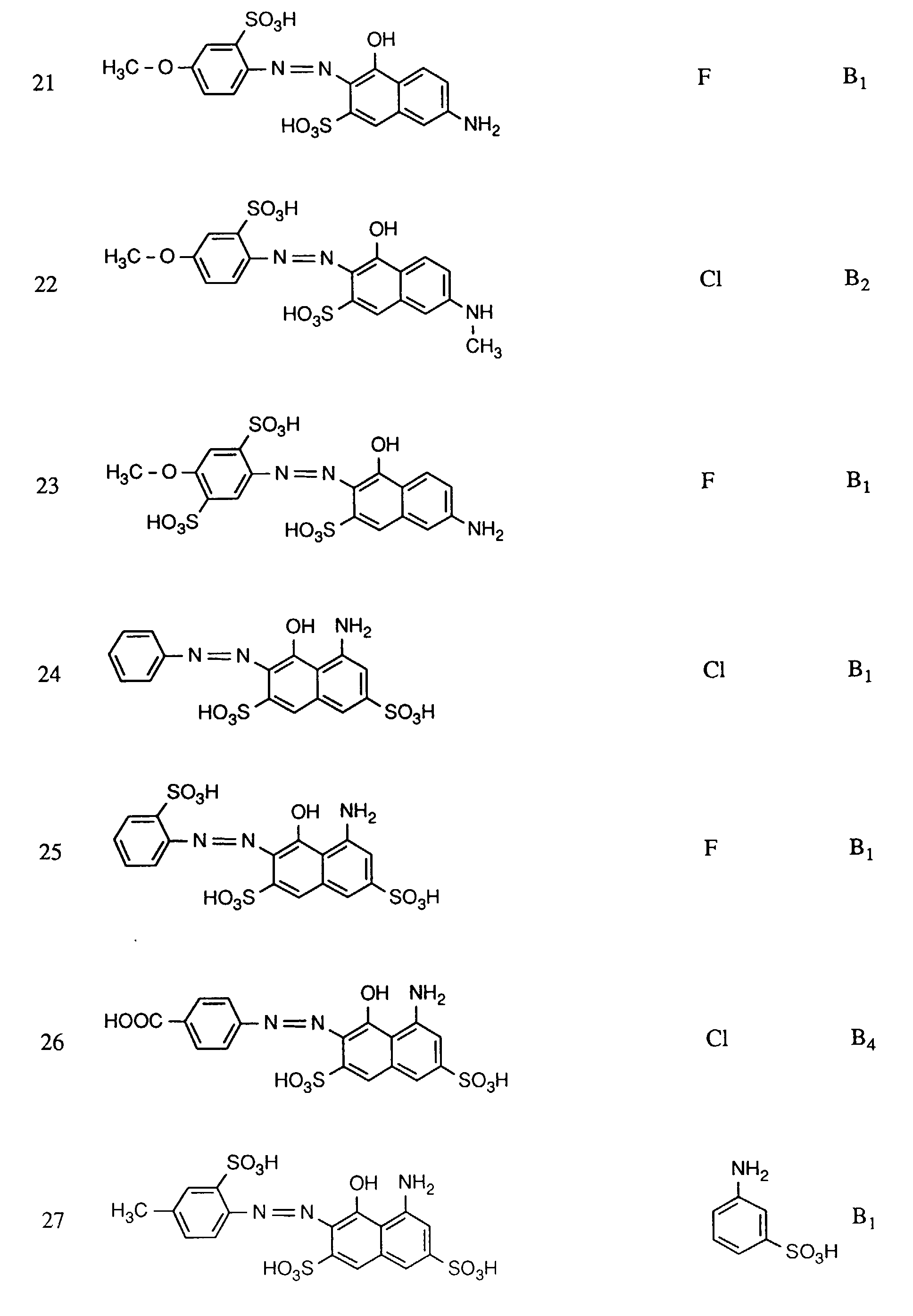

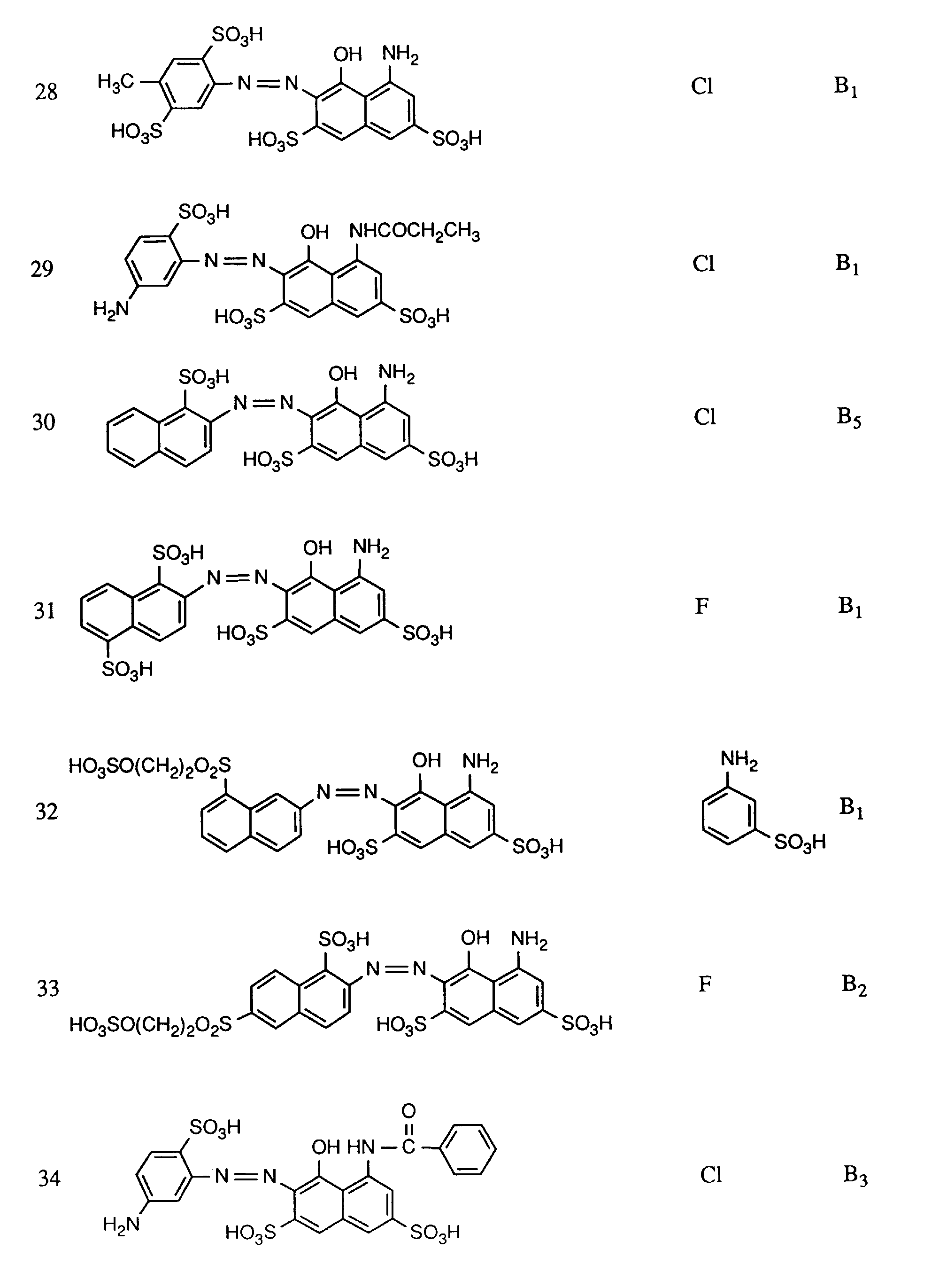

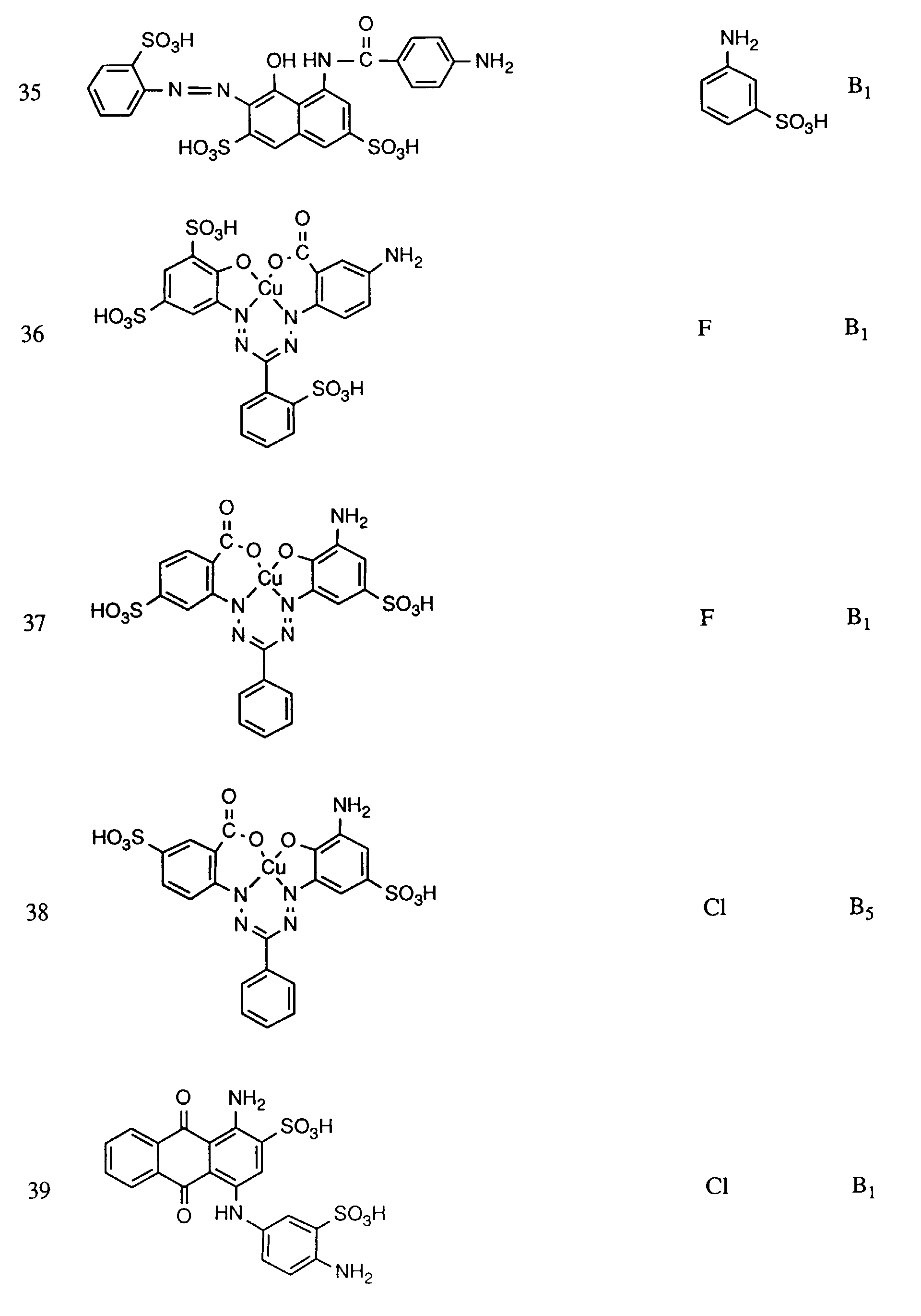

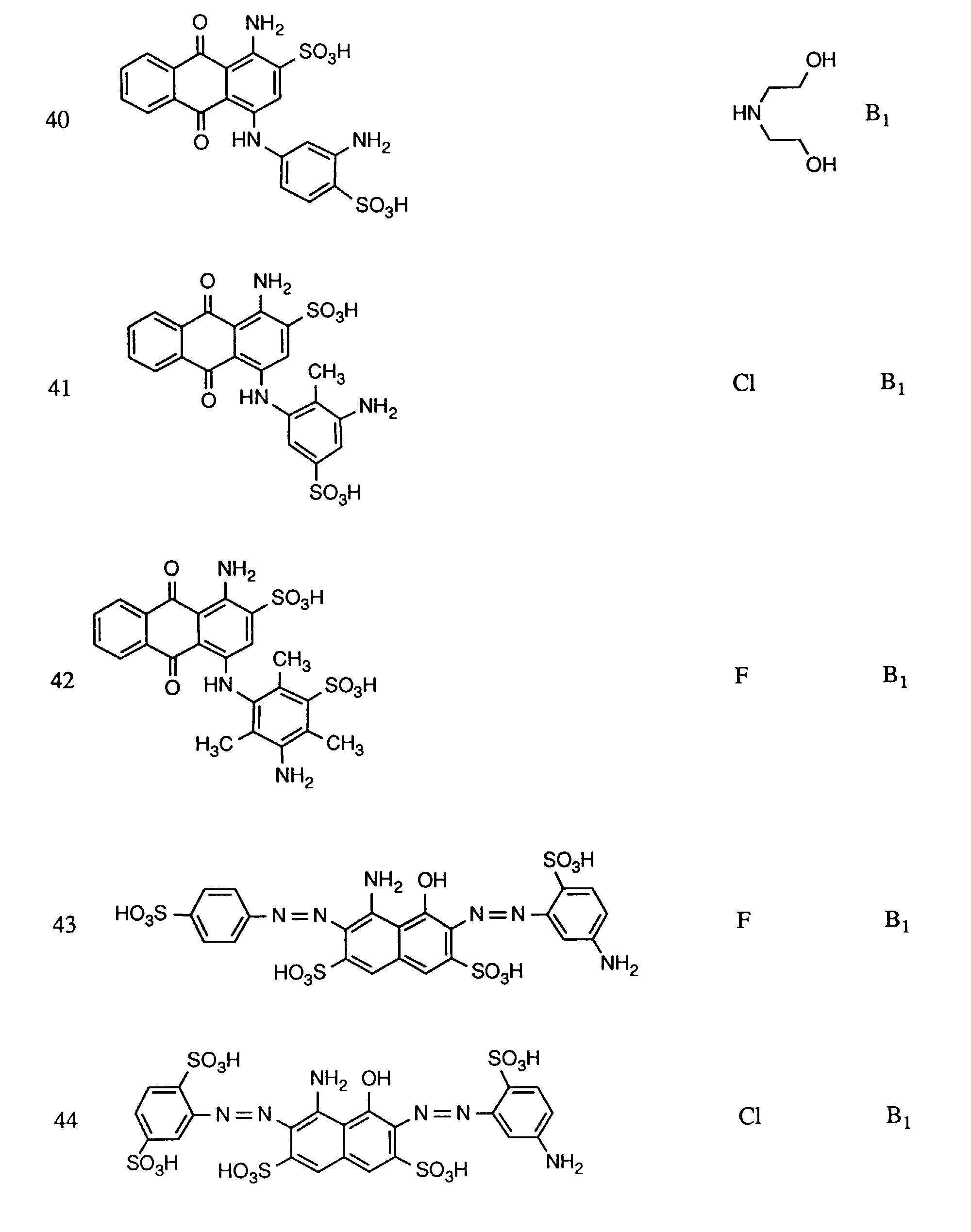

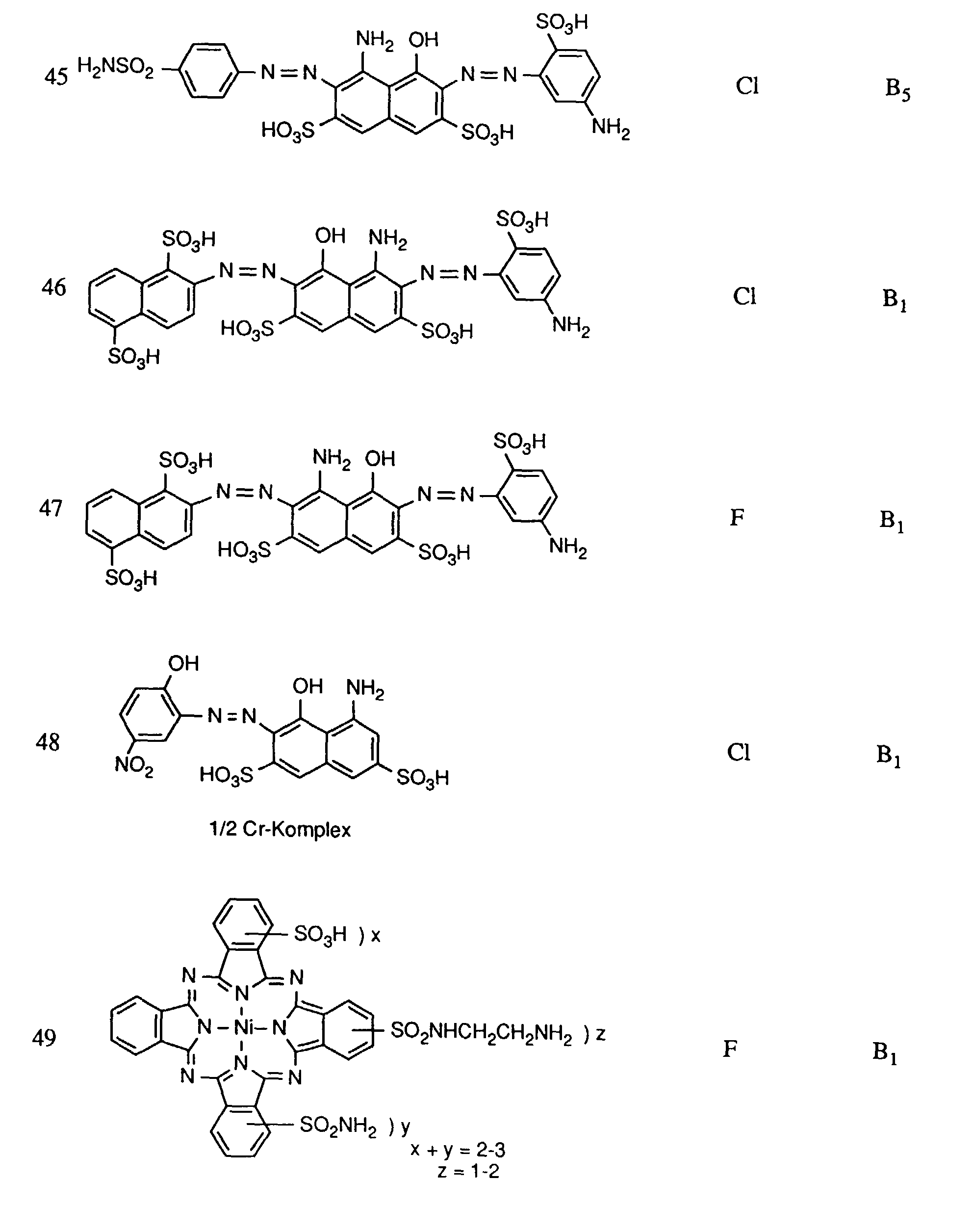

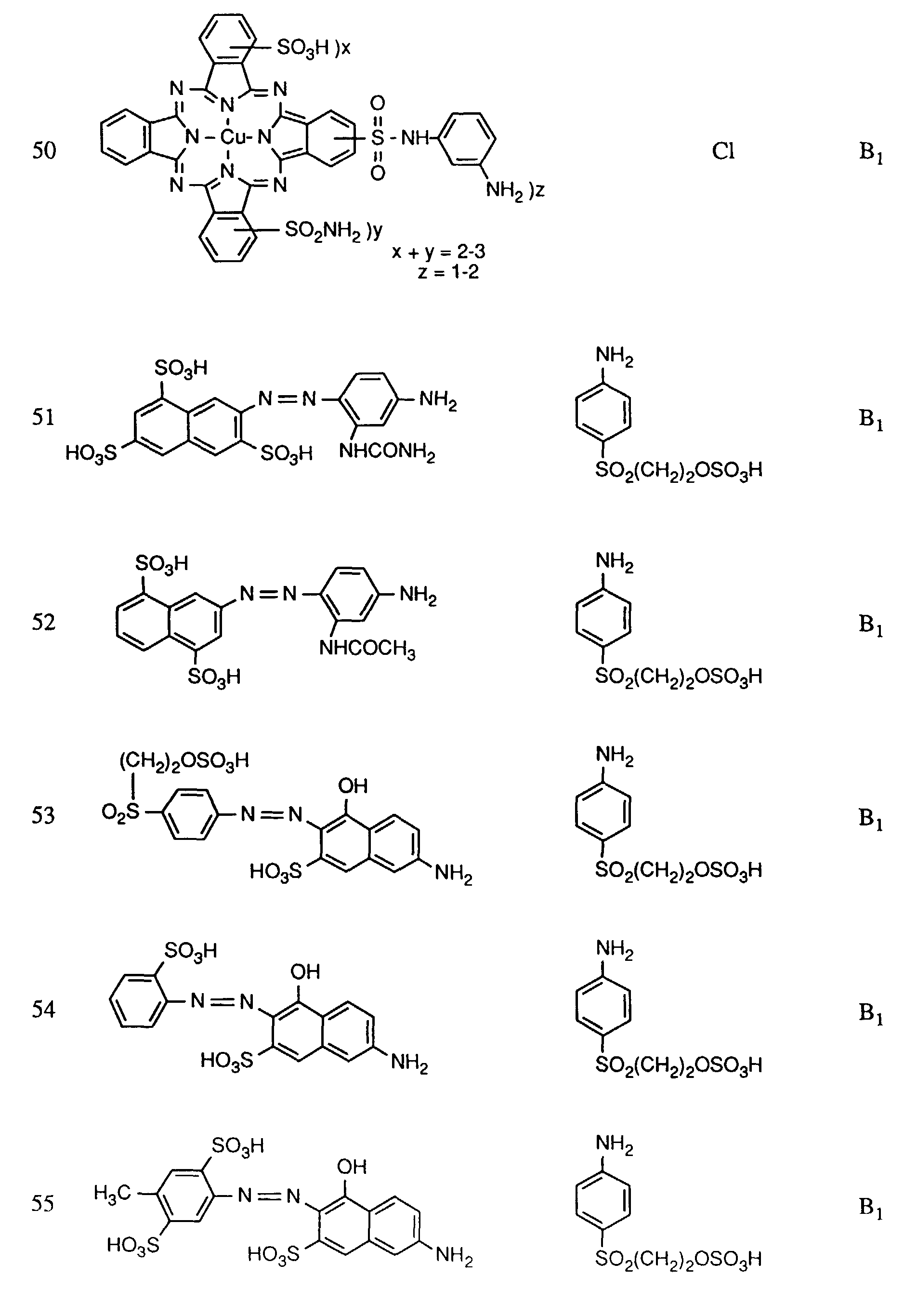

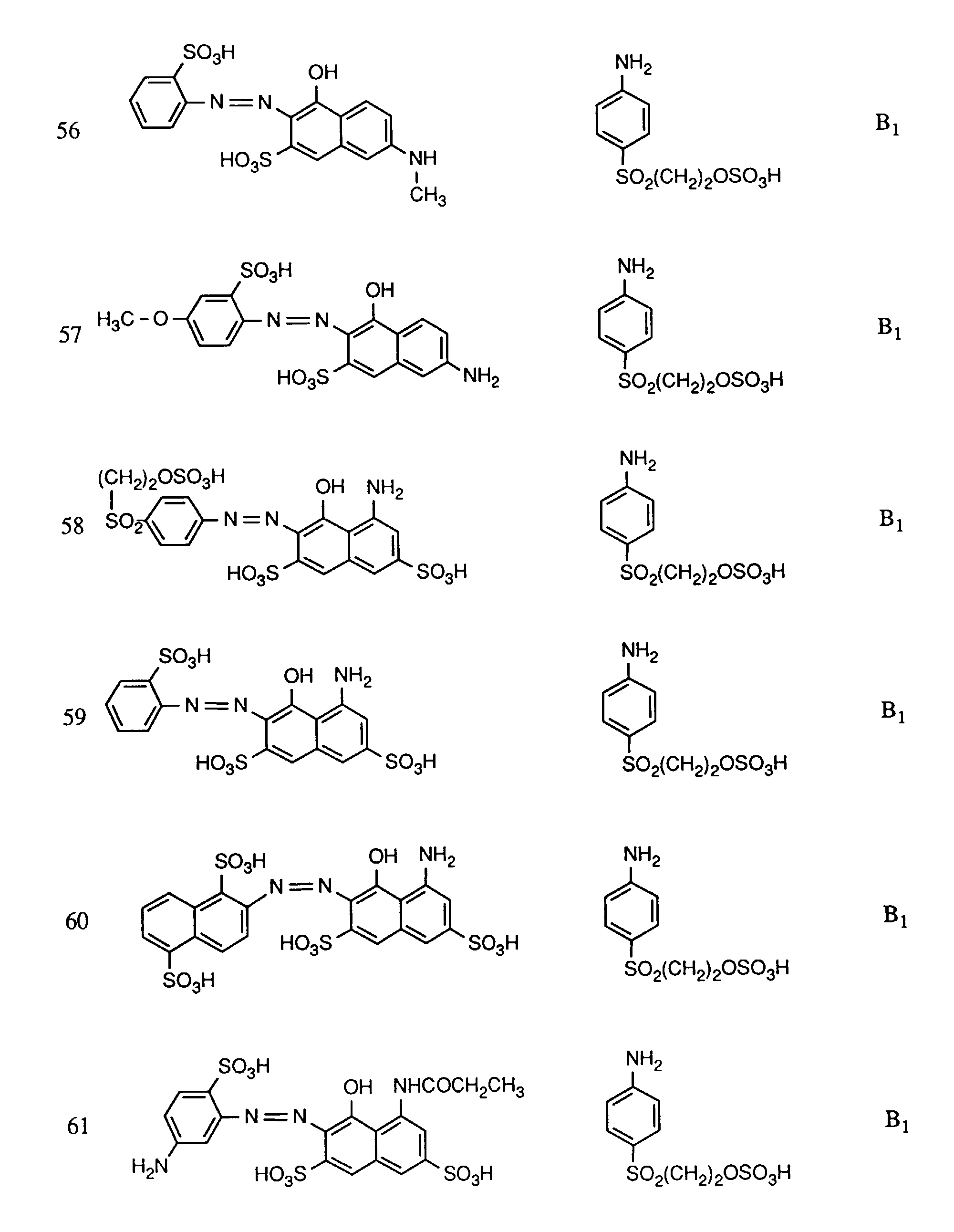

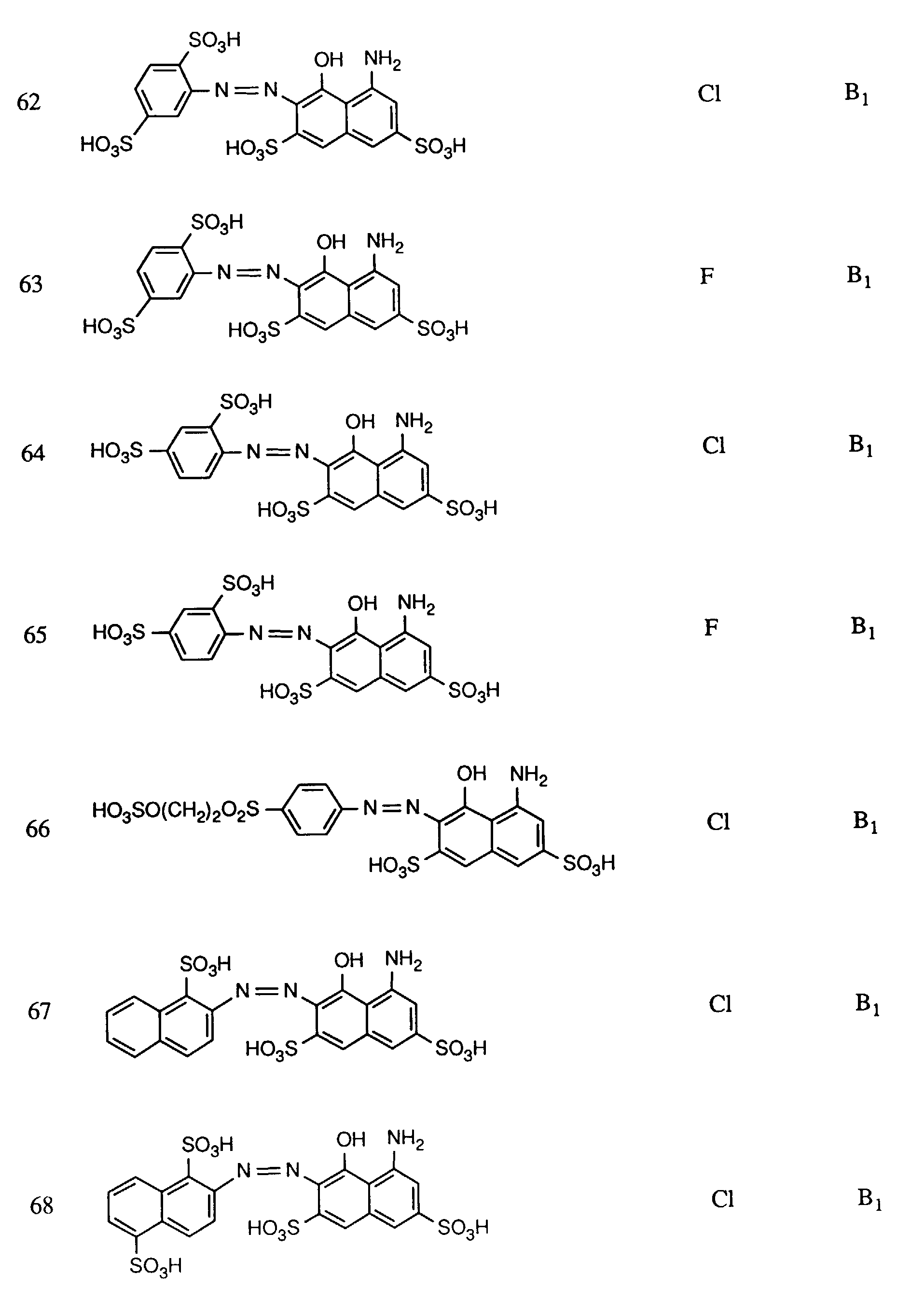

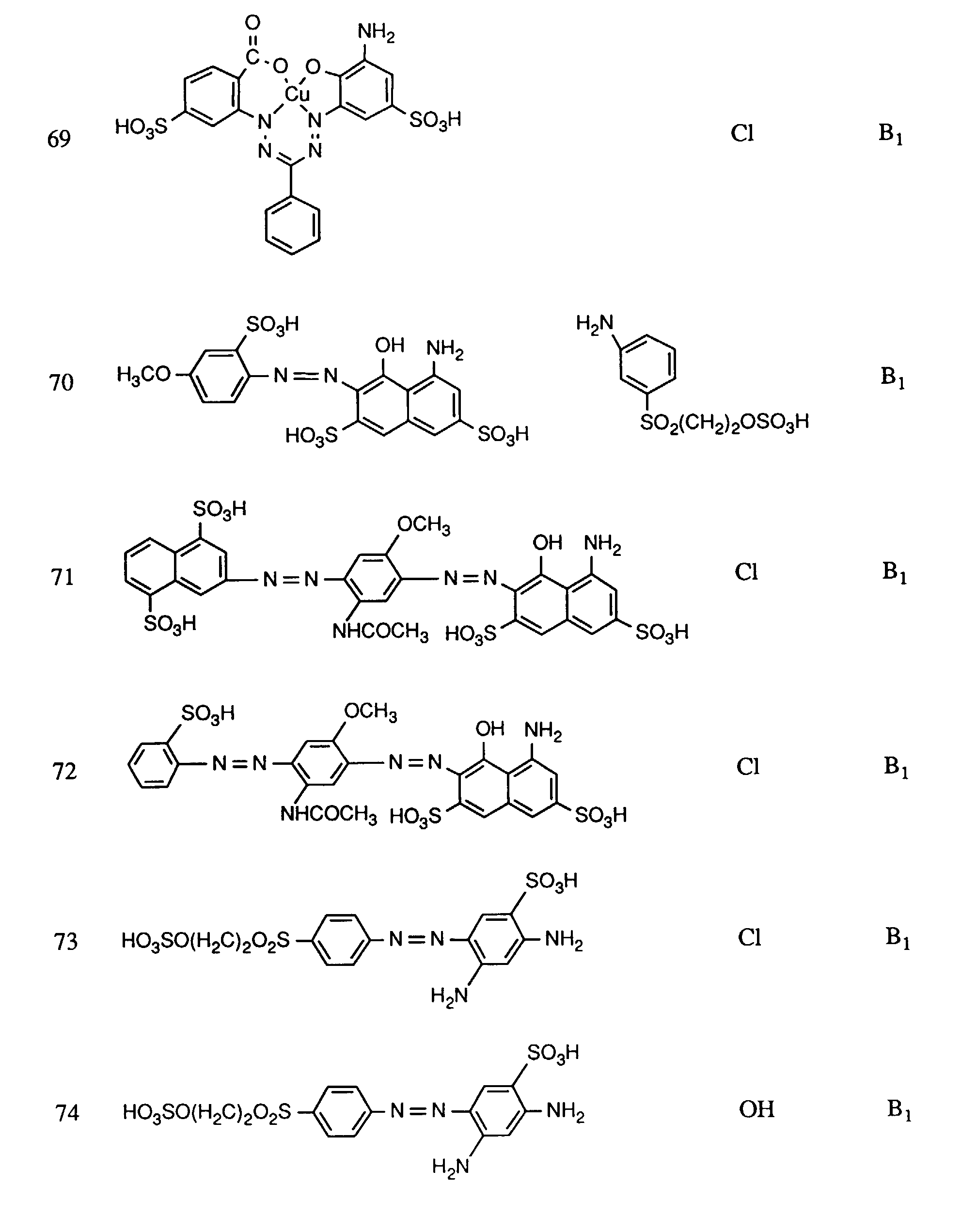

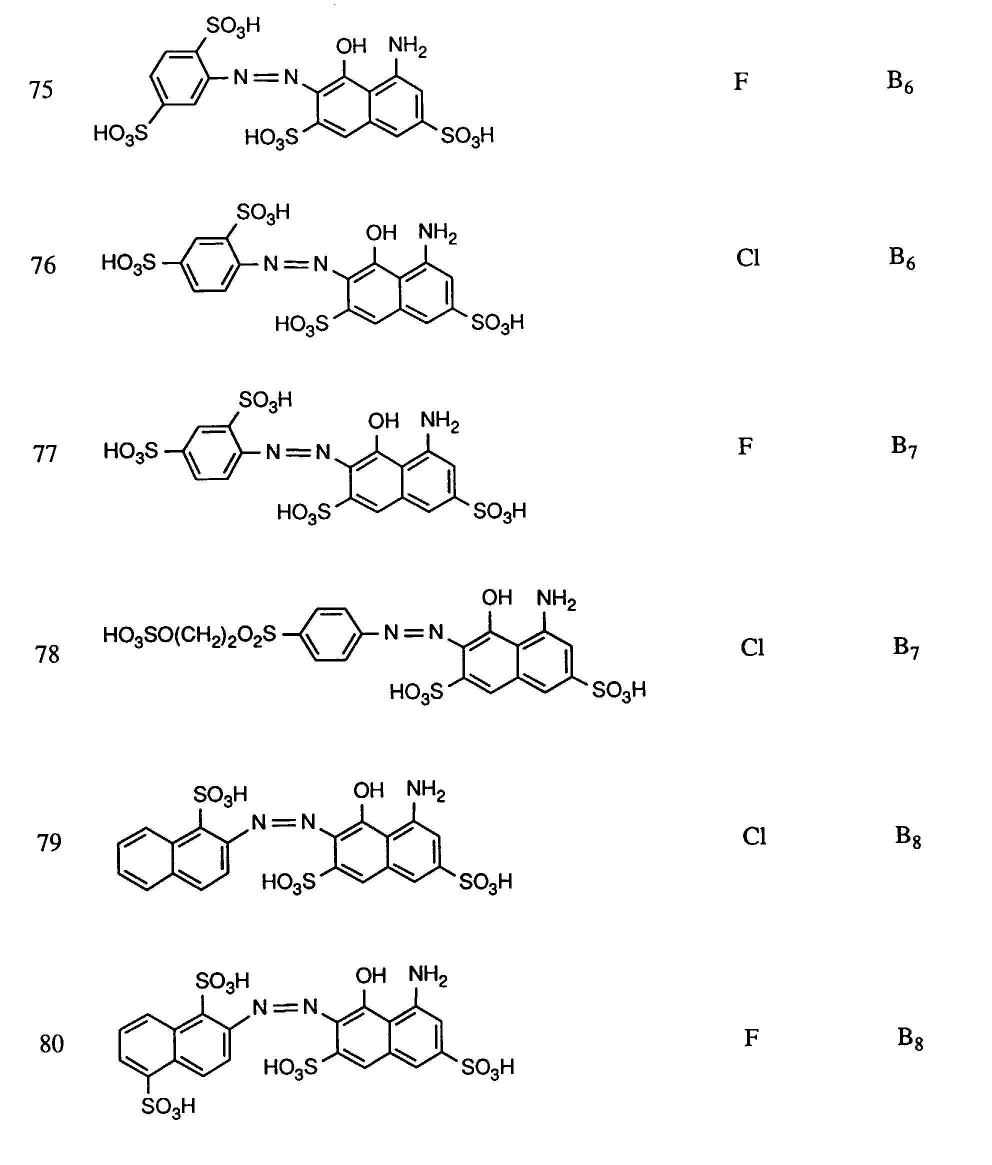

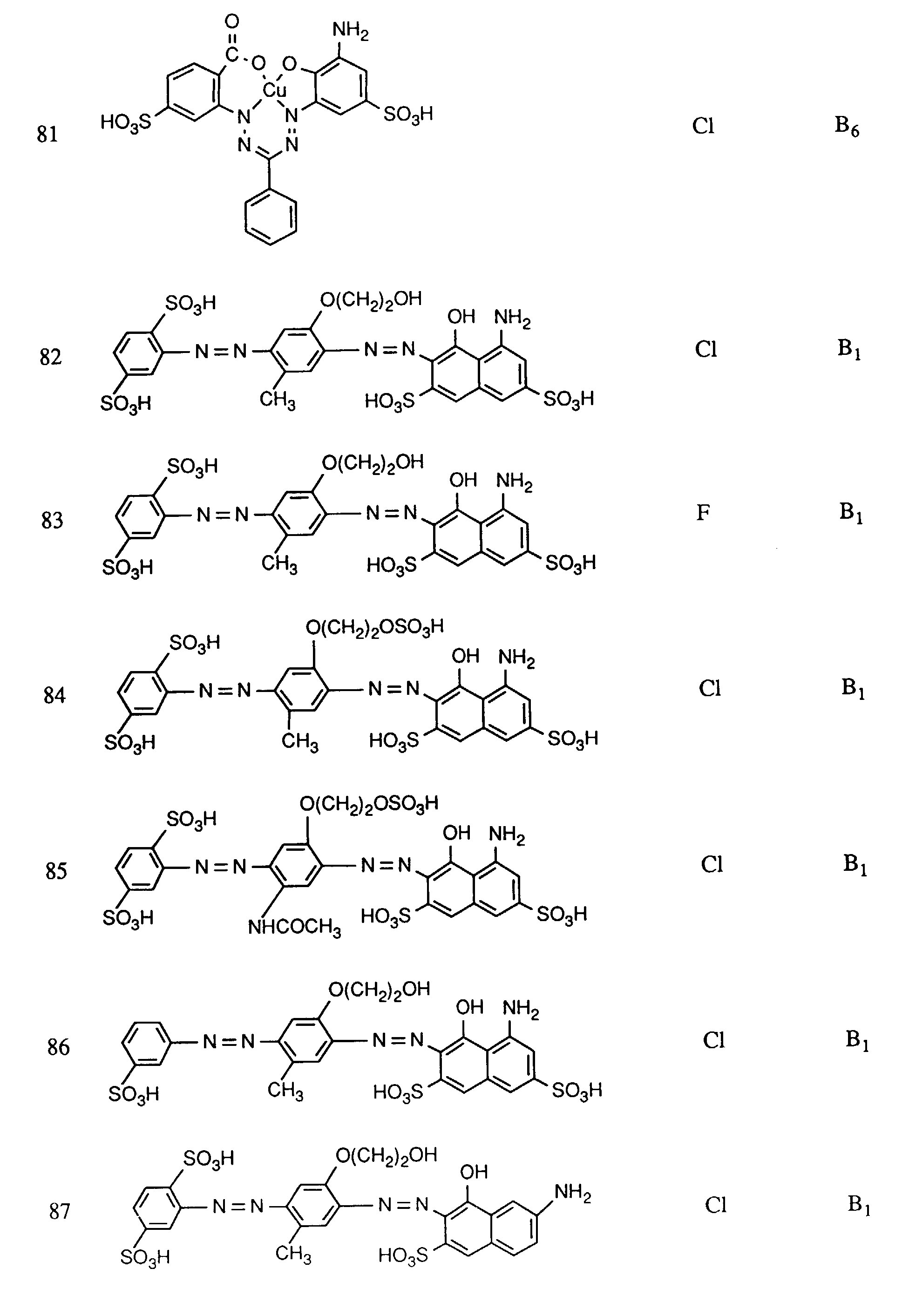

In der Tabelle 1 stehen die Variablen B₁ bis B₈ für die folgenden Diazokomponenten bzw. Amine:

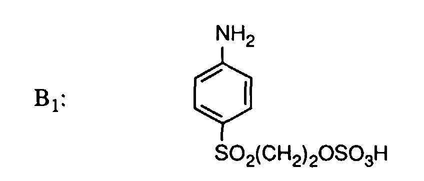

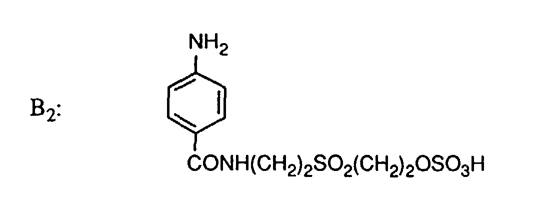

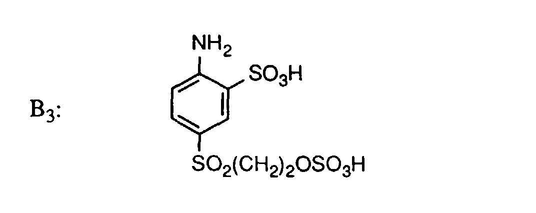

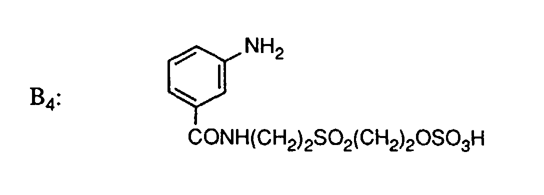

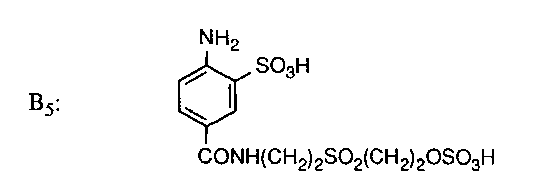

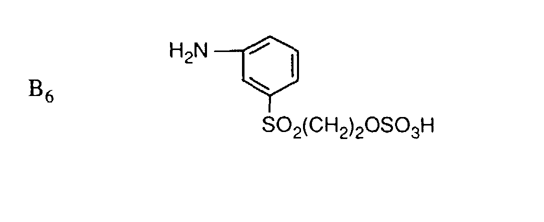

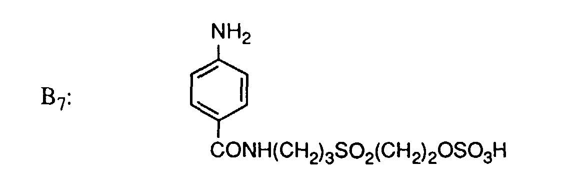

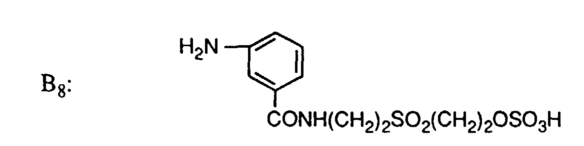

Beispiel 89: 2 Teile Farbstoff gemäss Beispiel 1 werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g wasserfreies Na₂CO₃ enthält, zugegeben. Die Temperatur des Färbebades wird weitere 45 Minuten bei 40°C gehalten. Danach wird die goldgelb gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 90: 2 Teile des gemäss Beispiel 2 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g wasserfreies Na₂CO₃ enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird die gelb gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 91: 8 Teile des gemäss Beispiel 3 erhaltenen Farbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten.

Danach wird die rotgefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 92: 4 Teile des gemäss Beispiel 1 erhaltenen Farbstoffes werden in 50 Teilen Wasser gelöst. Dazu gibt man 50 Teile einer Lösung, die pro Liter 5 g Natriumhydroxyd und 20 g wasserfreies Na₂CO₃ enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die goldgelb gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 93: 6 Teile des gemäss Beispiel 2 erhaltenen Farbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gelb gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 94: 2 Teile des gemäss Beispiel 3 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die rote Färbung während 30 Sekunden bei 100 bis 102°C, spült, seift während einer Viertelstunde in einer 0,3%igen kochenden Lösung eines nichtionogenen Waschmittels, spült und trocknet. Die erhaltene Ware zeichnet sich durch sehr gute Echtheiten aus.

Beispiel 95: 3 Teile des gemäss Beispiel 1 erhaltenen Farbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das goldgelb bedruckte Gewebe wird dann gespült, gegebenenfalls kochend geseift und nochmals gespült, und anschliessend getrocknet. Die erhaltene Ware zeichnet sich durch sehr gute Echtheiten aus.

Beispiel 96: 5 Teile des gemäss Beispiel 1 erhaltenen Farbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen goldgelb bedruckten Stoff 8 Minuten bei 102°C in gesättigtem Dampf. Das bedruckte Gewebe wird dann gespült, gegebenenfalls kochend geseift und nochmals gespült, und anschliessend getrocknet. Die erhaltene Ware zeichnet sich durch sehr gute Echtheiten aus.

## Patentansprüche

1. Verbindungen der Formel 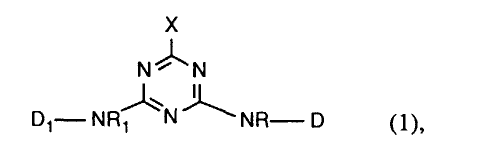 worin D ein Rest der Formel 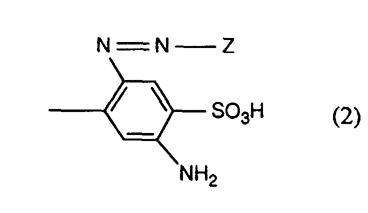 ist,
D₁ den Rest eines Monoazo-, Polyazo-, Metallkomplexazo-, Anthrachinon-, Triphendioxazin-, Phthalocyanin- oder Formazan-Chromophors bedeutet,
X für Fluor, Chlor, Brom, 3-Carboxypyridin-1-yl, 3-Carbamoylpyridin-1-yl, gegebenenfalls substituiertes Amino, Hydroxy, C₁-C₄-Alkoxy, Phenoxy, C₁-C₄-Alkylthio, Morpholino, Aryl oder Aralkyl steht,
R und R₁ unabhängig voneinander je Wasserstoff oder gegebenenfalls durch Halogen, Hydroxy, Cyano, C₁-C₄-Alkoxy, C₁-C₄-Alkoxycarbonyl, Carboxyl, Sulfo oder Sulfato substituiertes C₁-C₄-Alkyl bedeuten, und
Z einen Rest der Formel 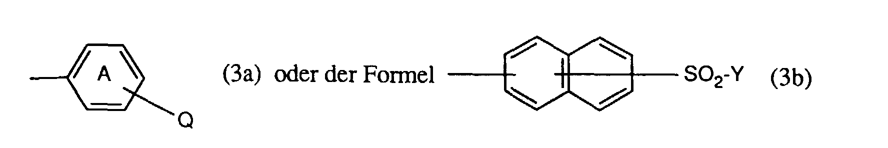 bedeutet,
Q für einen Rest der Formel
-SO₂-Y (5a),
-CONH-(CH₂)ₙ-SO₂-Y (5b),
-(O)ₚ-(CH₂)ₘ-CONH-(CH₂)ₙ-SO₂-Y (5c)
oder
-NH-CO-T (5d)
steht,
Y Vinyl oder einen Rest -CH₂-CH₂-U bedeutet und U eine Abgangsgruppe ist,
T α,β-Halogenopropionyl oder α-Halogenoacryloyl bedeutet,
n und m unabhängig voneinander eine ganze Zahl 1 bis 6 sind,
p die Zahl 0 oder 1 bedeutet, und
der Phenylring A gegebenenfalls weitersubstituiert ist.

2. Verbindungen gemäss Anspruch 1, dadurch gekennzeichnet, dass R und R₁ unabhängig voneinander je für Methyl, Ethyl oder Wasserstoff stehen.

3. Verbindungen gemäss Anspruch 1 oder 2, dadurch gekennzeichnet, dass X Chlor, Fluor, Hydroxy, Amino, unsubstituiertes oder im Alkylteil durch Hydroxy substituiertes N-Mono- oder N,N-Di-C₁-C₄-Alkylamino, unsubstituiertes oder im Phenylteil durch Methyl, Ethyl, Methoxy, Ethoxy, Carboxy, Sulfo, Chlor oder durch einen Rest der im Anspruch 1 angegebenen Formel (5a) oder (5b) substituiertes Phenylamino, Methoxy, Ethoxy, iso-Propoxy, Methylthio, Ethylthio oder Morpholino bedeutet.

4. Verbindungen gemäss einem der Ansprüche 1 bis 3, dadurch gekennzeichnet, dass X für Chlor, Fluor, Amino, β-Hydroxyethylamino, N,N-Di-β-hydroxyethylamino, o-, m- oder p-Sulfophenylamino oder Morpholino steht.

5. Verbindungen gemäss einem der Ansprüche 1 bis 4, dadurch gekennzeichnet, dass Z einen Rest der Formel (3a) bedeutet.

6. Verbindungen gemäss einem der Ansprüche 1 bis 5, dadurch gekennzeichnet, dass Q für einen Rest der Formel
-SO₂-Y (5a),
-CONH-(CH₂)₂₋₄-SO₂-Y (5b'),
-(CH₂)₁₋₃-CONH-(CH₂)₂₋₄-SO₂-Y (5c')
oder
-NH-CO-T (5d),
worin Y Vinyl, β-Brom- und β-Chlorethyl, β-Acetoxyethyl, β-Benzoyloxyethyl, β-Phosphatoethyl, β-Sulfiitoethyl oder β-Thiosulfatoethyl und T α,β-Dibrompropionyl oder α-Bromacryloyl bedeuten, steht.

7. Verbindungen gemäss einem der Ansprüche 1 bis 6, dadurch gekennzeichnet, dass Q für einen Rest der Formel
-SO₂-Y (5a)
oder
-CONH-(CH₂)₂₋₃-SO₂-Y (5bʺ),
worin Y Vinyl oder β-Sulfatoethyl bedeutet, steht.

8. Verbindungen gemäss einem der Ansprüche 1 bis 7, dadurch gekennzeichnet, dass Z für einen Phenylrest der im Anspruch 1 angegebenen Formel (3a) steht, der ausser Q keine weiteren Substituenten trägt oder durch 1 oder 2 Reste aus der Gruppe Methyl, Ethyl, Methoxy, Ethoxy, Chlor und Sulfo weitersubstituiert ist, und worin Q die im Anspruch 6 angegebene Bedeutung hat.

9. Verbindungen gemäss einem der Ansprüche 1 bis 8, dadurch gekennzeichnet, dass Z für einen Rest der Formel 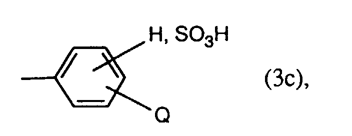 worin Q die im Anspruch 6 angegebene Bedeutung hat, steht.

10. Verbindungen gemäss einem der Ansprüche 1 bis 9, dadurch gekennzeichnet, dass D₁ den Rest eines Mono- oder Disazofarbstoffes bedeutet.

11. Verbindungen gemäss Anspruch 10, dadurch gekennzeichnet, dass D₁ den Rest eines Mono- oder Disazofarbstoffes, der Formel
D*-N=N-(M-N=N)ᵤ-K- (6a)
oder
-D*-N=N-(M-N=N)ᵤ-K (6b)
oder den Rest eines Disazofarbstoffes, der Formel
-D*-N=N-K₁-N=N-D₁* (7a)
oder eines davon abgeleiteten Metallkomplexes bedeutet, worin D* und D₁* unabhängig voneinander je der Rest einer Diazokomponente der Benzol- oder Naphthalinreihe, M der Rest einer Mittelkomponente der Benzol- oder Naphthalinreihe, K der Rest einer Kupplungskomponente der Benzol-, Naphthalin-, Pyrazolon-, 6-Hydroxypyridon-(2)- oder Acetessigsäurearylamid-Reihe und K₁ der Rest einer Kupplungskomponente der Naphthalinreihe ist, wobei D*, D₁*, M, K und K₁ jeweils unsubstituiert oder durch Hydroxy, Amino, Methyl, Ethyl, Methoxy, Ethoxy, 2-Hydroxyethoxy, 2-Sulfatoethoxy, 2-Methoxyethoxy, 2-Ethoxyethoxy, Alkanoylamino mit 2 bis 4 C-Atomen, Benzoylamino, Halogen oder einen faserreaktiven Rest -SO₂-Y, wobei Y die im Anspruch 1 angegebene Bedeutung hat, substituiert sind, u = 0 oder 1 ist, und D*, M und K bzw. D*, D₁* und K₁ zusammen jeweils mindestens zwei Sulfogruppen enthalten.

12. Verbindungen gemäss Anspruch 1 der Formel 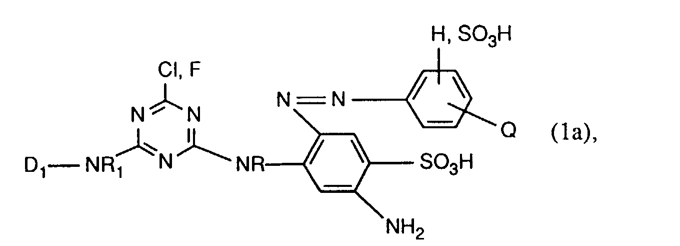 worin D₁ den Rest eines Monoazo- oder Disazochromophors bedeutet, R und R₁ unabhängig voneinander je Wasserstoff, Methyl oder Ethyl sind und Q für einen Rest der Formel
-SO₂-Y (5a)
oder
-CONH-(CH₂)₂₋₃-SO₂-Y (5bʺ),
worin Y Vinyl oder β-Sulfatoethyl bedeutet, steht.

13. Verbindungen gemäss Anspruch 12 der Formel (la), dadurch gekennzeichnet, dass D₁ ein Rest der Formel 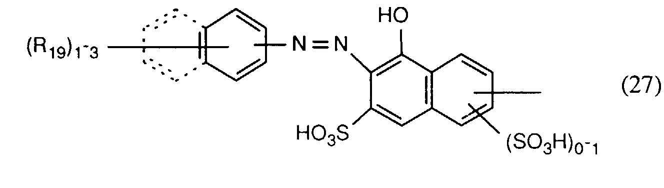 oder 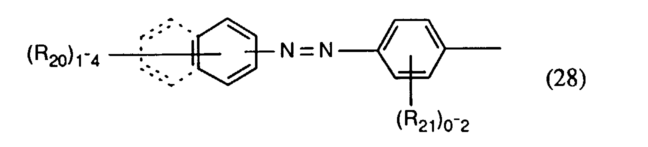 ist, worin (R₁₉)₁₋₃ für 1 bis 3 gleiche oder verschiedene Substituenten R₁₉ aus der Gruppe Sulfo, Methoxy, Methyl und Rest der Formel -SO₂-Y, worin Y Vinyl oder β-Sulfatoethyl ist, steht, (R₂₀)₁₋₄ für 1 bis 4 gleiche oder verschiedene Substituenten R₂₀ aus der Gruppe Sulfo, Hydroxy, Benzoylamino, Acetylamino und Propionylamino steht und (R₂₁)₀₋₂ für 0 bis 2 gleiche oder verschiedene Substituenten R₂₁ aus der Gruppe Methyl, Methoxy, 2-Hydroxyethoxy, 2-Sulfatoethoxy, Sulfo, Acetylamino und Ureido steht.

14. Verbindungen gemäss Anspruch 12 der Formel (la), dadurch gekennzeichnet, dass D₁ ein Rest der Formel 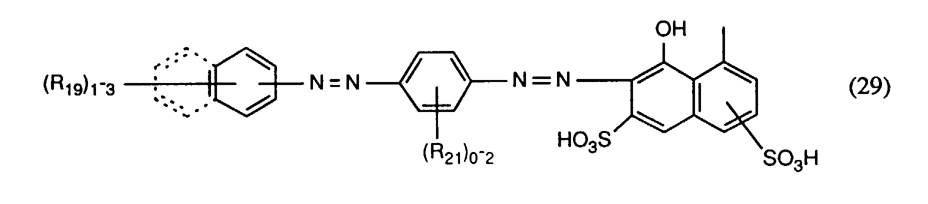 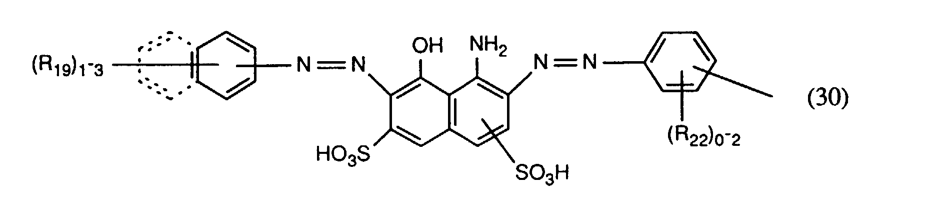 ist, worin (R₁₉)₁₋₃ und (R₂₁)₀₋₂ die im Anspruch 13 angegebene Bedeutung haben und (R₂₂)₀₋₂ für 0 bis 2 gleiche oder verschiedene Substituenten R₂₂ aus der Gruppe Sulfo, Chlor, Methyl und Methoxy steht.

15. Verfahren zur Herstellung von Verbindungen der Formel (1) gemäss Anspruch 1, dadurch gekennzeichnet, dass man ein Moläquivalent eines organischen Farbstoffs der Formel
D₁-NHR₁ (24),
ein Moläquivalent der Verbindung der Formel
D-NHR (25)
oder geeignete Vorprodukte der Verbindungen der Formeln (24) oder (25) und ein Moläquivalent eines Halotriazins, vorzugsweise 2,4,6-Trichlor- oder 2,4,6-Trifluor-s-triazin, in beliebiger Reihenfolge miteinander umsetzt oder, im Fall der Verwendung von Vorprodukten der Verbindungen der Formeln (24) oder (25), die erhaltenen Zwischenprodukte in die gewünschten Farbstoffe überführt und gegebenenfalls eine weitere Umwandlungsreaktion anschliesst, worin D, D₁, R und R₁ jeweils die im Anspruch 1 angegebene Bedeutung haben.

16. Verfahren zum Färben und Bedrucken von cellulosehaltigen Fasermaterialien, dadurch gekennzeichnet, dass man die Fasermaterialien in wässriger Lösung mit einem Farbstoff der Formel (1) gemäss Anspruch 1 behandelt.

17. Verfahren gemäss Anspruch 16, dadurch gekennzeichnet, dass es sich bei den cellulosehaltigen Fasermaterialien um Baumwolle handelt.

18. Verwendung von Farbstoffen der Formel (1) gemäss Anspruch 1 zum Färben und Bedrucken von cellulosehaltigen Fasermaterialien.

19. Färbe- bzw. Druckpräparate enthaltend mindestens einen Farbstoff der Formel (1) gemäss Anspruch 1.

## Claims

1. A compound of the formula 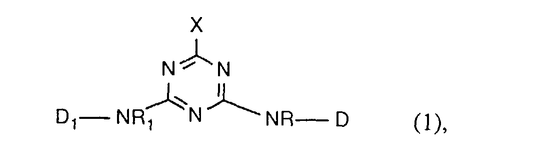 in which D is a radical of the formula 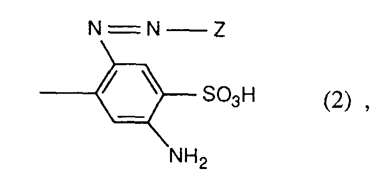
D₁is the radical of a monoazo, polyazo, metal complex azo, anthraquinone, triphendioxazine, phthalocyanine or formazan chromophore,
X is fluorine, chlorine, bromine, 3-carboxypyridin-1-yl, 3-carbamoylpyridin-1-yl, substituted or unsubstituted amino, hydroxyl, C₁-C₄alkoxy, phenoxy, C₁-C₄alkylthio, morpholino, aryl or aralkyl,
R and R₁ independently of one another are each hydrogen or C₁-C₄alkyl which is unsubstituted or substituted by halogen, hydroxyl, cyano, C₁-C₄alkoxy, C₁-C₄alkoxycarbonyl, carboxyl, sulfo or sulfato and
Z is a radical of the formula 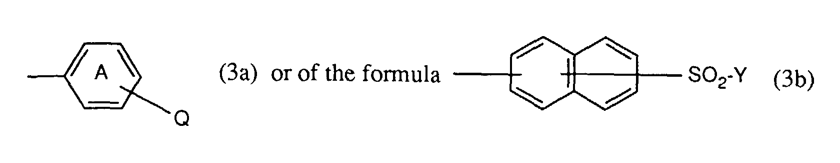
Q is a radical of the formula
-SO₂-Y (5a),
-CONH-(CH₂)ₙ-SO₂-Y (5b),
-(O)ₚ-(CH₂)ₘ-CONH-(CH₂)ₙ-SO₂-Y (5c)
or
-NH-CO-T (5d)
Y is vinyl or a radical -CH₂-CH₂-U and U is a leaving group,
T is α,β-halopropionyl or α-haloacryloyl,
n and m independently of one another are an integer from 1 to 6,
p is the number 0 or 1, and
the phenyl ring A is unsubstituted or further substituted.

2. A compound according to claim 1, in which R and R₁ independently of one another are each methyl, ethyl or hydrogen.

3. A compound according to claim 1 or 2, in which X is chlorine, fluorine, hydroxyl, amino, N-mono- or N,N-di-C₁-C₄alkylamino which are unsubstituted or substituted in the alkyl part by hydroxyl, phenylamino which is unsubstituted or substituted in the phenyl part by methyl, ethyl, methoxy, ethoxy, carboxyl, sulfo, chlorine or by a radical of the formula (5a) or (5b) defined in claim 1, methoxy, ethoxy, iso-propoxy, methylthio, ethylthio or morpholino.

4. A compound according to any one of claims 1 to 3, in which X is chlorine, fluorine, amino, β-hydroxyethylamino, N,N-di-β-hydroxyethylamino, o-, m- or p-sulfophenylamino or morpholino.

5. A compound according to any one of claims 1 to 4, in which Z is a radical of the formula (3a).

6. A compound according to any one of claims 1 to 5, in which Q is a radical of the formula
-SO₂-Y (5a),
-CONH-(CH₂)₂₋₄-SO₂-Y (5b'),
-(CH₂)₁₋₃-CONH-(CH₂)₂₋₄SO₂-Y (5c')
or
-NH-CO-T (5d),
in which Y is vinyl, β-bromo- and β-chloroethyl, β-acetoxyethyl, β-benzoyloxyethyl, β-phosphatoethyl, β-sulfatoethyl or β-thiosulfatoethyl and T is α,β-dibromopropionyl or α-bromoacryloyl.

7. A compound according to any one of claims 1 to 6, in which Q is a radical of the formula
-SO₂-Y (5a)
or
-CONH-(CH₂)₂₋₃-SO₂-Y (5bʺ),
in which Y is vinyl or β-sulfatoethyl.

8. A compound according to any one of claims 1 to 7, in which Z is a phenyl radical of the formula (3a) defined in claim 1, which carries no further substituents apart from Q or is further substituted by 1 or 2 radicals from the group consisting of methyl, ethyl, methoxy, ethoxy, chlorine and sulfo, and in which Q is as defined in claim 6.

9. A compound according to any one of claims 1 to 8, in which Z is a radical of the formula 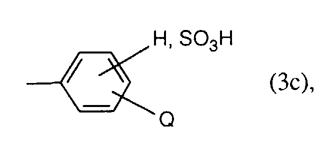 in which Q is as defined in claim 6.

10. A compound according to any one of claims 1 to 9, in which D₁ is the radical of a mono- or disazo dye.

11. A compound according to claim 10, in which D₁ is the radical of a mono- or disazo dye of the formula
D*-N=N-(M-N=N)ᵤ-K- (6a)
or
-D*-N=N-(M-N=N)ᵤ-K (6b)
or the radical of a disazo dye of the formula
-D*-N=N-K₁-N=N-D₁* (7a)
or of a metal complex derived therefrom, in which D* and D₁* independently of one another are each the radical of a diazo component of the benzene or naphthalene series, M is the radical of a central component of the benzene or naphthalene series, K is the radical of a coupling component of the benzene, naphthalene, pyrazolone, 6-hydroxy-2-pyridone or acetoacetic acid arylamide series and K₁ is the radical of a coupling component of the naphthalene series; and in which D*, D₁*, M, K and K₁ are in each case unsubstituted or substituted by hydroxyl, amino, methyl, ethyl, methoxy, ethoxy, 2-hydroxyethoxy, 2-sulfatoethoxy, 2-methoxyethoxy, 2-ethoxyethoxy, alkanoylamino having 2 to 4 C atoms, benzoylamino, halogen or a fibre-reactive radical -SO₂-Y, in which Y is as defined in claim 1, u is 0 or 1 and D*, M and K or D*, D₁* and K₁ in each case together contain at least two sulfo groups.

12. A compound according to claim 1 of the formula 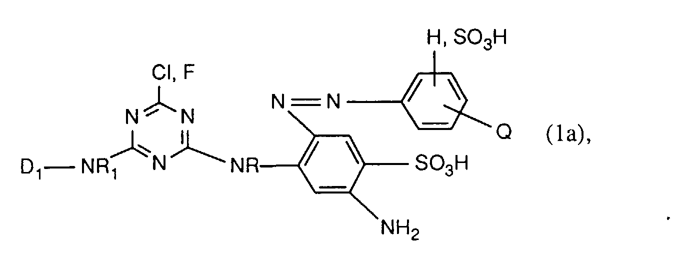 in which D₁ is the radical of a monoazo or disazo chromophore, R and R₁ independently of one another are each hydrogen, methyl or ethyl and Q is a radical of the formula
-SO₂-Y (5a)
or
-CONH-(CH₂)₂₋₃-SO₂-Y (5bʺ),
in which Y is vinyl or β-sulfatoethyl.

13. A compound according to claim 12 of the formula (1a), in which D₁ is a radical of the formula 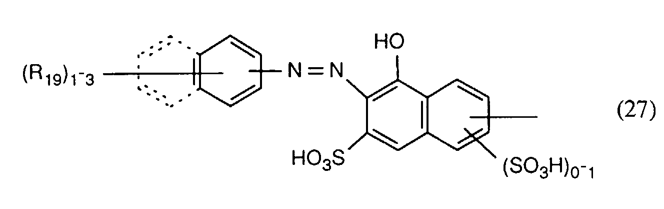 or 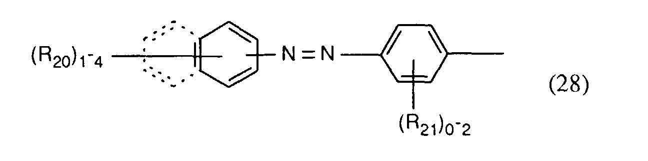 in which (R₁₉)₁₋₃ is 1 to 3 identical or different substituents R₁₉ from the group consisting of sulfo, methoxy, methyl and the radical of the formula -SO₂-Y, in which Y is vinyl or β-sulfatoethyl, (R₂₀)₁₋₄ is 1 to 4 identical or different substituents R₂₀ from the group consisting of sulfo, hydroxyl, benzoylamino, acetylamino and propionylamino and (R₂₁)₀₋₂ is 0 to 2 identical or different substituents R₂₁ from the group consisting of methyl, methoxy, 2-hydroxyethoxy, 2-sulfatoethoxy, sulfo, acetylamino and ureido.

14. A compound according to claim 12 of the formula (1a), in which D₁ is a radical of the formula 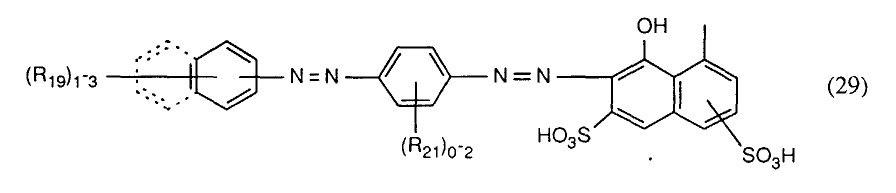 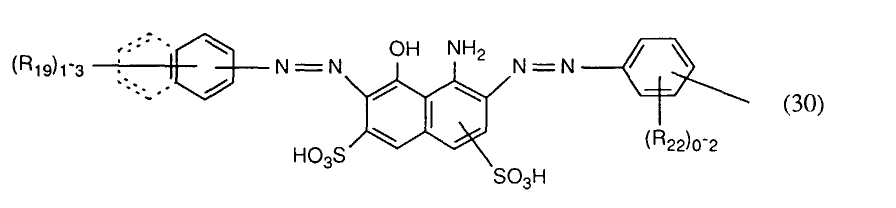 in which (R₁₉)₁₋₃ and (R₂₁)₀₋₂ are as defined in claim 13 and (R₂₂)₀₋₂ is 0 to 2 identical or different substituents R₂₂ from the group consisting of sulfo, chlorine, methyl and methoxy.

15. A process for the preparation of a compound of the formula (1) according to claim 1, which comprises reacting one molar equivalent of an organic dye of the formula
D₁-NHR₁ (24),
one molar equivalent of the compound of the formula
D-NHR (25)
or suitable precursors of the compounds of the formulae (24) or (25) and one molar equivalent of a halotriazine, preferably 2,4,6-trichloro- or 2,4,6-trifluoro-s-triazine, with one another in any sequence, or, if precursors of the compounds of the formulae (24) or (25) are used, converting the resulting intermediates into the desired dyes and if appropriate subsequently carrying out a further conversion reaction, in which D, D₁, R and R₁ in each case are as defined in claim 1.

16. A process for dyeing and printing cellulosic fibre materials, which comprises treating the fibre materials with a dye of the formula (1) according to claim 1 in aqueous solution.

17. The process according to claim 16, wherein the cellulosic fibre material is cotton.

18. The use of a dye of the formula (1) according to claim 1 for dyeing and printing cellulosic fibre materials.

19. Dyeing and printing preparations comprising at least one dye of the formula (1) according to claim 1.

## Revendications

1. Composés de formule 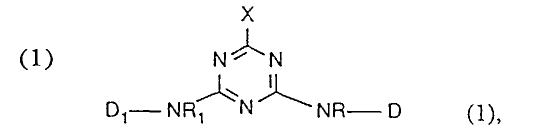 dans laquelle D représente un résidu 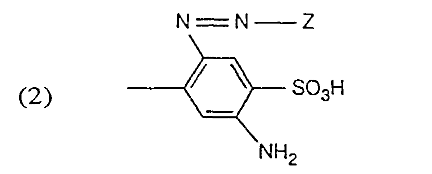 D₁ représente le résidu d'un chromophore monoazoïque, polyazoïque, azoïque métallifère, anthraquinonique, triphényltrioxazinique, ou de type phtalocyanine ou formazan,
X représente un atome de fluor, de chlore ou de brome, un résidu 3-carboxypyridin-1-yle, 3-carbamoylpyridin-1-yle, amino éventuellement substitué, hydroxy, alcoxy en C₁₋₄, phénoxy, alkylthio en C₁₋₄, morpholino, aryle ou aralkyle,
R et R₁ représentent, indépendamment l'un de l'autre chacun un atome d'hydrogène ou un groupe alkyle en C₁₋₄ pouvant porter un substituant halogéno, hydroxy, cyano, alcoxy en C₁₋₄, (alcoxy en C₁₋₄)-carbonyle, carboxyle, sulfo ou sulfato, et
Z représente un résidu de formule 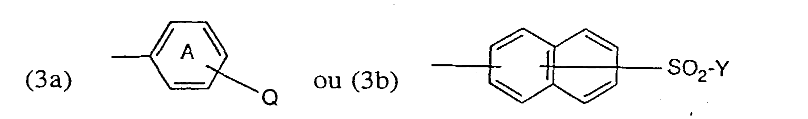
Q représente un résidu de formule
(5a) -SO₂-Y
(5b) -CONH-(CH₂)ₙ-SO₂-Y
(5c) -(O)ₚ-(CH₂)ₘ-CONH-(CH₂)ₙ-SO₂-Y
ou
(5d) -NH-CO-T,
Y représente un groupe vinyle ou un résidu -CH₂-CH₂-U et U un groupe partant,
T représente un résidu α,β-halogénopropionyle ou α-halogénoacryloyle,
n et m représentent, indépendamment l'un de l'autre, un nombre entier compris entre 1 et 6,
p vaut 0 ou 1, et
le noyau phényle A peut être substitué à son tour.

2. Composés conformes à la revendication 1, caractérisés en ce que R et R₁ représentent, indépendamment l'un de l'autre, chacun un résidu méthyle, éthyle ou un atome d'hydrogène.

3. Composés conformes à la revendication 1 ou 2, caractérisés en ce que X représente un atome de chlore ou de fluor, un groupe hydroxy, amino, N-mono- ou N,N-di-(alkyle en C₁₋₄)-amino non substitué ou hydroxylé dans la partie alkyle, phénylamino non substitué ou portant, dans la partie phényle, un substituant méthyle, éthyle, méthoxy, éthoxy, carboxy, sulfo, chloro ou un résidu de formule (5a) ou (5b) indiquées dans la revendication 1, ou un résidu méthoxy, éthoxy, iso-propoxy, méthylthio, éthylthio ou morpholino.

4. Composés conformes à une des revendications 1 à 3, caractérisés en ce que X représente un atome de chlore ou de fluor, un groupe amino, β-hydroxyéthylamino, N,N-di-β-hydroxyéthylamino, o-, m- ou p-sulfophénylamino ou morpholino.

5. Composés conformes à une des revendications 1 à 4, caractérisés en ce que Z représente un résidu de formule (3a).

6. Composés conformes à une des revendications 1 à 5, caractérisés en ce que Q représente un résidu de formule
(5a) -SO₂-Y
(5b') -CONH-(CH₂)₂₋₄-SO₂-Y
(5c') -(CH₂)₁₋₃-CONH-(CH₂)₂₋₄-SO₂-Y
ou
(5d) -NH-CO-T
où Y représente un groupe vinyle, β-bromoéthyle, β-chloroéthyle, β-acétoxyéthyle, β-benzoyloxy, β-phosphatoéthyle, β-sulfatoéthyle ou β-thiosulfatoéthyle et T représente un résidu α,β-dibromopropionyle ou α-bromoacryloyle.

7. Composés conformes à une des revendications 1 à 6, caractérisés en ce que Q représente un résidu de formule
(5a) -SO₂-Y
ou
(5b") -CONH-(CH₂)₂₋₃-SO₂-Y
où Y représente un groupe vinyle ou β-sulfatoéthyle.

8. Composés conformes à une des revendications 1 à 7, caractérisés en ce que Z représente un résidu phényle de formule (3a) indiquée dans la revendication 1 qui ne porte pas d'autres substituants que Q ou qui porte en plus 1 ou 2 résidus méthyle, éthyle, méthoxy, éthoxy, chloro ou sulfo, Q ayant la signification et les préférences indiquées dans la revendications 6.

9. Composés conformes à une des revendications 1 à 8, caractérisés en ce que Z représente un résidu de formule 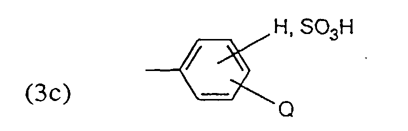 dans laquelle Q a la signification indiqués dans la revendication 6.

10. Composés conformes à une des revendications 1 à 9, caractérisés en ce que D₁ représente le résidu d'un colorant monoazoïque ou diazoïque.

11. Composés conformes à la revendication 10, caractérisés en ce que D₁ représente le résidu d'un colorant monoazoïque ou diazoïque de formule
(6a) D*-N=N-(M-N=N)ᵤ-K-
ou
(6b) -D*-N=N-(M-N=N)ᵤ-K
ou le résidu d'un colorant diazoïque de formule
(7a) -D*-N=N-K₁-N=N-D₁*
ou d'un complexe métallique dérivés de ceux-ci, où D* et D₁* représentent chacun indépendamment le résidu d'un composant diazo de la série benzénique ou naphtalénique, M représente le résidu d'un composant médian de la série benzénique ou naphtalénique, K représente le résidu d'un copulant de la série benzénique ou naphtalénique ou de la série des pyrazolones, 6-hydroxypyridones-(2)- ou acétarylamides et K₁ est le résidu d'un copulant de la série naphtalénique, D*, D₁*, M, K et K₁ pouvant être non substitués ou porter des substituants hydroxy, amino, méthyle, éthyle, méthoxy, éthoxy, 2-hydroxyéthoxy, 2-sulfatoéthoxy, 2-méthoxyéthoxy, 2-éthoxyéthoxy, alcanoylamino en C₂₋₄, benzoylamino, halogéno ou un résidu réactif vis-à-vis des fibres de formule -SO₂-Y où Y a la signification indiquée dans la revendication 1; u = 0 ou 1; et D*, M et K ou D*, D₁* et K₁ contiennent conjointement au moins deux groupes sulfo.

12. Composés conformes à la revendication 1 de formule 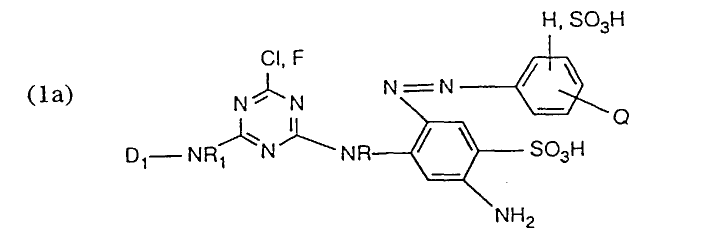 dans lesquels D₁ représente le résidu d'un chromophore monoazoïque ou diazoïque, R et R₁ représentent, indépendamment l'un de l'autre, chacun un atome d'hydrogène, un groupe méthyle ou éthyle et Q représente un résidu de formule
(5a) -SO₂-Y
ou
(5b") -CONH-(CH₂)₂₋₃-SO₂-Y
où Y représente un groupe vinyle ou un groupe β-sulfatoéthyle.

13. Composés de formule (1a) conformes à la revendication 12, caractérisés en ce que D₁ représente un résidu de formule 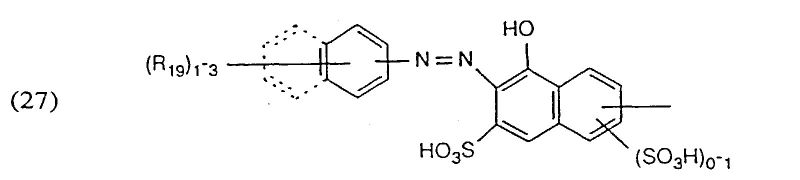 ou 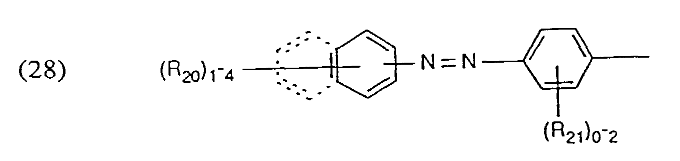 où (R₁₉)₁₋₃ représente de 1 à 3 substituants R₁₉ identiques ou différents, choisis parmi les résidus sulfo, méthoxy, méthyle et -SO₂-Y, où Y représente un groupe vinyle ou β-sulfatoéthyle, (R₂₀)₁₋₄ repréente de 1 à 4 substituants R₂₀ identiques ou différents, choisis parmi les résidus sulfo, hydroxy, benzoylamino, acétylamino et propionylamino, et (R₂₁)₀₋₂ représente de 0 à 2 substituants R₂₁ identiques ou différents, choisis parmi les résidus méthyle, méthoxy, 2-hydroxyéthoxy, 2-sulfatoéthoxy, sulfo, acétylamino et uréido.

14. Composés de formule (1a) conformes à la revendication 12, caractérisés en ce que D₁ représente un résidu de formule 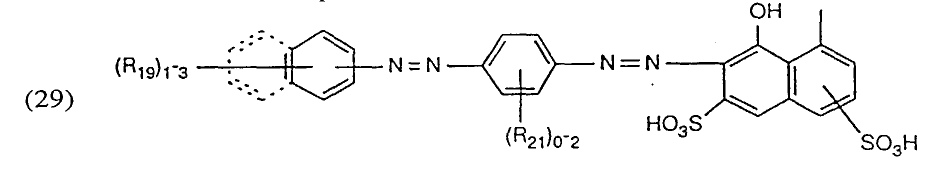 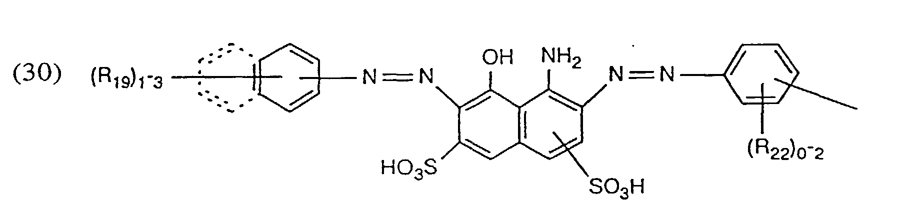 où (R₁₉)₁₋₃ et (R₂₁)₀₋₂ ont la signification indiquée dans la revendication 13, et (R₂₂)₀₋₂ représente de 0 à 2 substituants R₂₂ identiques ou différents choisis parmi les résidus sulfo, chloro, méthyle et méthoxy.

15. Procédé de préparation de composés de formule (1) conformes à la revendication 1, caractérisé en ce que l'on fait réagir, dans n'importe quel ordre, 1 équivalent molaire d'un colorant organique de formule
(24) D₁-NHR₁
avec 1 équivalent molaire d'un composé de formule
(25) D-NHR
ou des précurseurs appropriés des composés de formule (24) ou (25), et 1 équivalent molaire d'une halogénotriazine, de préférence d'une 2,4,6-trichloro- ou 2,4,6-trifluoro-s-triazine, ou, dans le cas où l'on utilise des précurseurs des composés de formule (24) ou (25), en ce que l'on convertit les produits intermédiaires obtenus en les colorants recherchés, et en ce que l'on fait suivre éventuellement une réaction de conversion supplémentaire, D, D₁, R et R₁ ayant les significations et préférences indiquées dans la revendication 1.

16. Procédé de teinture et d'impression de matériaux fibreux contenant de la cellulose, caractérisé en ce que l'on traite les matériaux fibreux dans des solutions aqueuses contenant un colorant de formule (1) conforme à la revendication 1.

17. Procédé conforme à la revendication 16, caractérisé en ce que le matériau fibreux contenant de la cellulose est du coton.

18. Utilisation de colorants de formule (1) conformes à la revendication 1 pour la teinture et l'impression de matériaux fibreux contenant de la cellulose.

19. Préparations pour la teinture et l'impression contenant au moins un colorant de formule (1) conforme à la revendication 1.
